(19) Europäisches Patentamt
European Patent Office
Office européen des brevets

(11) Veröffentlichungsnummer: **0 545 219 A1**

(12) # EUROPÄISCHE PATENTANMELDUNG

(21) Anmeldenummer: **92119964.2**

(22) Anmeldetag: **24.11.92**

(51) Int. Cl.$^5$: **C09B 62/44**, D06P 3/66

(30) Priorität: **05.12.91 DE 4140117**
**09.12.91 DE 4140541**
**06.02.92 DE 4203279**
**10.02.92 DE 4203794**

(43) Veröffentlichungstag der Anmeldung:
**09.06.93 Patentblatt 93/23**

(84) Benannte Vertragsstaaten:
**CH DE FR GB LI**

(71) Anmelder: **BAYER AG**

**W-5090 Leverkusen 1 Bayerwerk(DE)**

(72) Erfinder: **Herd, Karl-Josef, Dr.**
**Am Gartenfeld 66**
**W-5068 Odenthal-Holz(DE)**
Erfinder: **Harms, Wolfgang, Dr.**
**Osenauer Strasse 46**
**W-5068 Odenthal(DE)**
Erfinder: **Hoppe, Manfred, Dr.**
**Ammerweg 23**
**W-5067 Kürten 2(DE)**
Erfinder: **Eizenhöfer, Thomas**
**Johannes-Müller-Strasse 3**
**W-5000 Köln 60(DE)**
Erfinder: **Reddig, Wolfram, Dr.**
**Am Alten Feld 2**
**W-5060 Bergisch Gladbach(DE)**

(54) **Reaktivfarbstoffe, deren Herstellung und Verwendung.**

(57) Reaktivfarbstoffe, die als freie Säure folgender Formel entsprechen

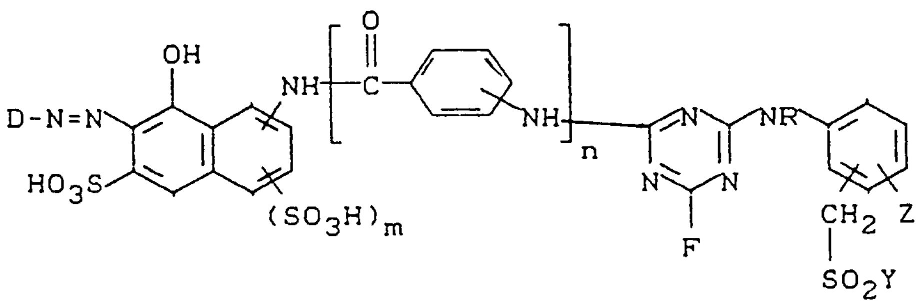

worin die Substituenten die in der Beschreibung angegebene Bedeutung haben, eignen sich insbesondere zum Färben und Bedrucken von natürlichen und synthetischen OH- und/oder amidgruppenhaltigen Materialien.

EP 0 545 219 A1

Die Erfindung betrifft neue Azoreaktivfarbstoffe mit einem Monofluortriazinyl- und Vinylsulfonylreaktivrest. Kombinationen von Reaktivkomponenten sind zwar aus EP-A-94055, EP-A-85025, EP-A-65732, US-A-47 00 038 und EP-A-307 817 bekannt, jedoch weist dieser Stand der Technik noch anwendungstechnische Probleme auf.

Die vorliegende Erfindung betrifft Mono- und Disazoreaktivfarbstoffe, die als freie Säure der Formel (1) entsprechen

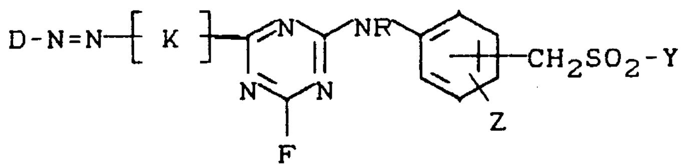

(1)

worin bedeuten

Y $CH=CH_2$, $CH_2CH_2OSO_3H$ oder $CH_2CH_2Cl$,

R H oder $C_1$-$C_3$-Alkyl, welches mit OH, $CO_2H$ oder CN substituiert sein kann, insbesondere $CH_3$, $C_2H_5$, $C_3H_7$, $CH_2CH_2OH$, $CH_2CH_2CO_2H$, $CH_2CO_2H$ oder $CH_2CH_2CN$,

Z H, $C_1$-$C_4$-Alkyl oder $C_1$-$C_4$-Alkoxy, insbesondere $CH_3$, $C_2H_5$, $OCH_3$, $OC_2H_5$ oder $OC_3H_7$ und

D ein mit $SO_3H$, $CO_2H$, $CH_2$-$SO_2W$, $SO_2W$, NH-$COCH_3$, $C_1$-$C_4$-Alkyl und/oder $C_1$-$C_4$-Alkoxy substituierter Phenyl- bzw. Naphthyl-Rest, wobei W eine der unter Y angegebenen Bedeutungen hat, oder ein Rest der Struktur

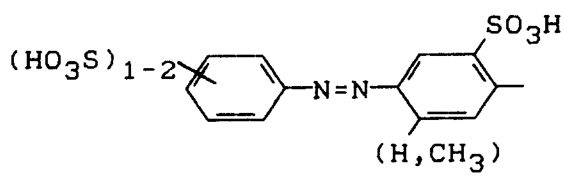

,

K =

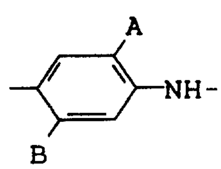

oder

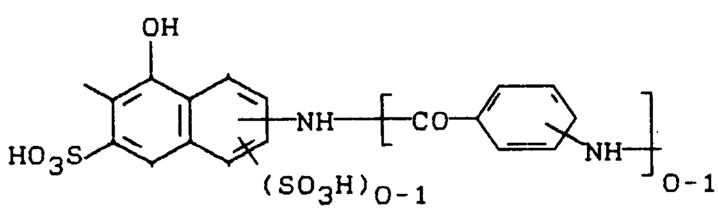

wobei die Bindung zum Triazinylrest jeweils an der Aminofunktion von K erfolgt,

A = H, $C_1$-$C_4$-Alkyl oder $C_1$-$C_4$-Alkoxy,

B = H, $C_1$-$C_4$-Alkyl, Halogen, $C_1$-$C_4$-Alkoxy, mit OH, $SO_3H$, $OSO_3H$ substituiertes $C_1$-$C_4$-Alkyl, $NHCONH_2$, NHCO-(-$C_1$-$C_4$-Alkyl), $NHCOCH_2OSO_3H$, NHCO-($CH_2$-$)_{1-3}SO_3H$, $NHCOCH_2OH$ oder NHCO-(-O-$C_1$-$C_4$-Alkyl).

Bevorzugte Vertreter der Formel (1), in denen
K =

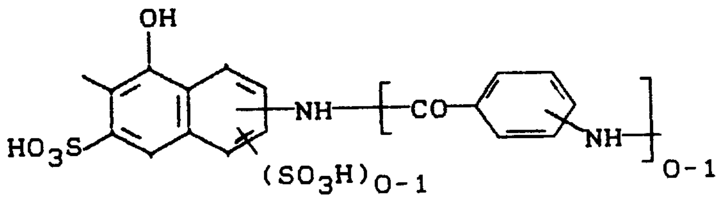

sind Farbstoffe der Formel (2)

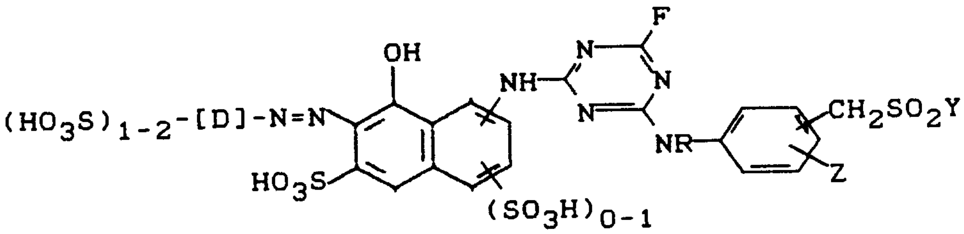
(2)

worin

R, Y und Z die obengenannte Bedeutung zukommt und der Phenyl- bzw. Naphthylrest D zusätzlich durch $C_1$-$C_4$-Alkyl, $C_1$-$C_4$-Alkoxy, $NHCOCH_3$, $CH_2SO_2W$ oder $SO_2W$ substituiert sein kann, wobei W eine der unter Y angegebenen Bedeutungen hat.

Besonders bevorzugt sind Farbstoffe insbesondere der Formel (2), worin D ein Rest der Formel (3) und (4) darstellt.

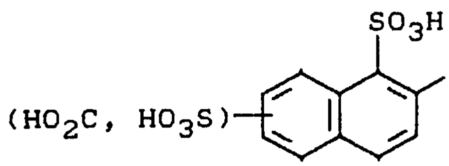
(3)

oder

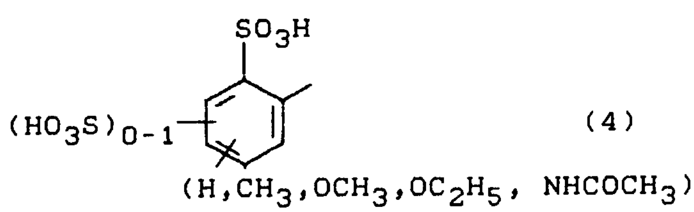
(4)

Besonders bevorzugt sind ebenfalls Farbstoffe der Formel (5) und (6)

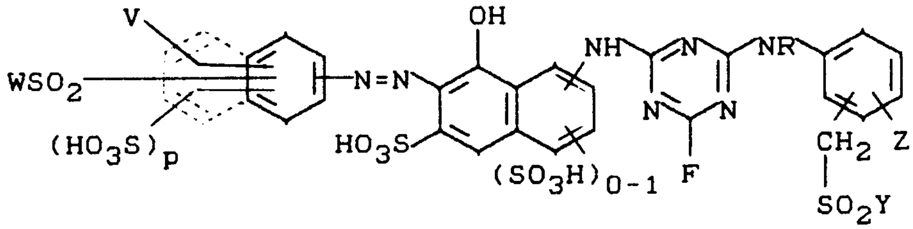

(5)

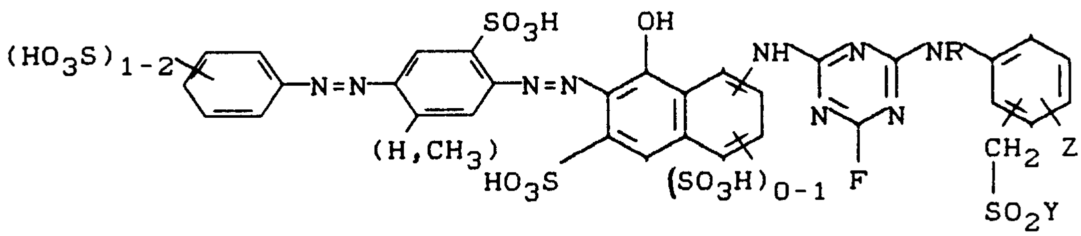

(6)

worin bedeuten

V H, $CH_3$, $OCH_3$, $OC_2H_5$ oder NHAcyl, insbesondere NH-CO-$CH_3$,

p,m unabhängig voneinander 0 oder 1,

R H oder $C_2H_5$,

W,Y unabhängig voneinander $CH=CH_2$ oder $CH_2CH_2OSO_3H$ und

Z H, $CH_3$ oder $OCH_3$.

Ganz besonders bevorzugt sind Farbstoffe der Formel (7) und (8)

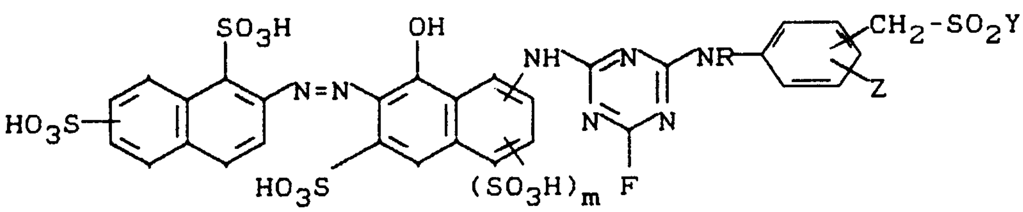

(7)

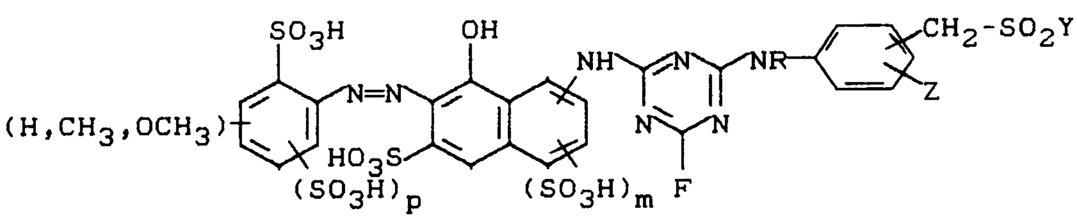

(8)

worin bedeuten

p, m unabhängig voneinander 0 oder 1,

R H oder $C_2H_5$.

Y $CH=CH_2$ oder $CH_2CH_2OSO_3H$

und

Z H, $CH_3$ oder $OCH_3$.

Bevorzugte Vertreter der Formel (1), in denen
K =

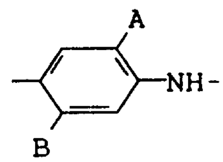

sind Farbstoff der Formel (9)

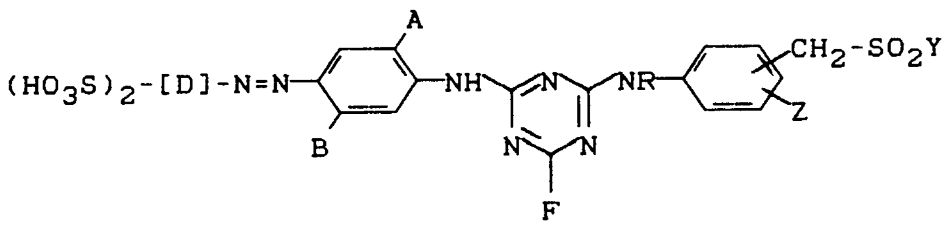

(9)

worin
A,B,R,Y und Z die für Formel (1) genannten Bedeutungen zukommt.

Der Phenyl- bzw. Naphthylrest D kann zusätzlich mit $C_1$-$C_4$-Alkyl, $C_1$-$C_4$-Alkoxy, $NHCOCH_3$, $CH_2SO_2W$ oder $SO_2W$ substituiert sein.

Besonders bevorzugt sind Farbstoffe der Formeln (10) und (11)

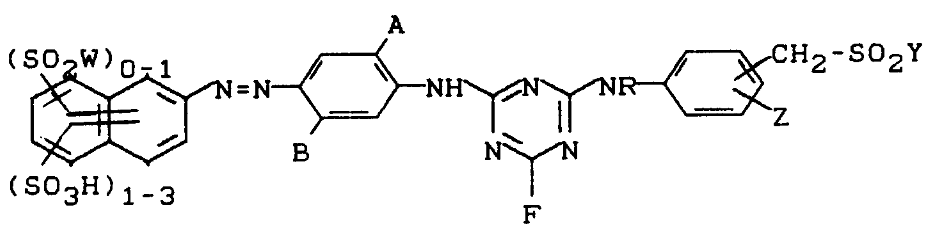

(10)

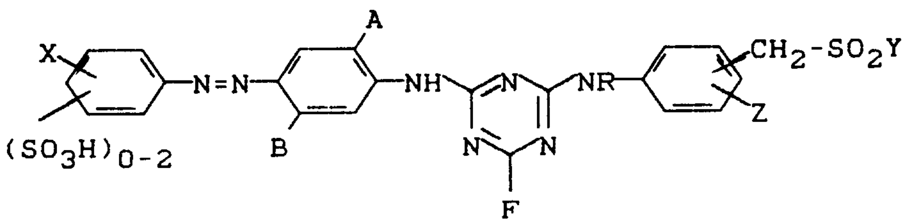

(11)

worin
X H, $CH_3$, $OCH_3$, $OC_2H_5$, $CH_2SO_2W$ oder $SO_2W$,
und
A, B, R, W und Z die für die Formel (1) genannten Bedeutungen zukommt, wobei B in Formel (10) insbesondere steht für H, $CH_3$, $C_1$-$C_4$-Alkoxy, NH-CO-($C_1$-$C_4$-Alkyl), $NHCOCH_2OH$, $NHCOCH_2OSO_3H$ oder NHCO(-$CH_2$)$_{1-3}$-$SO_3H$.

Ganz besonders bevorzugt sind Farbstoffe der Formel (10) und (11) mit
A = H,
B = $NHCOCH_3$, $NHCONH_2$ oder $NHCOCH_2OSO_3H$, in Formel (10), insbesondere $CH_3$, $OCH_3$,

$NHCOCH_3$ oder $NHCOCH_2OSO_3H$,

R = H oder $C_2H_5$,

W, Y = unabhängig voneinander $CH=CH_2$ oder $CH_2CH_2OSO_3H$, und

Z = H, $CH_3$ oder $OCH_3$.

Die Formeln (1) bis (11) geben die sulfogruppenhaltigen Farbstoffe in Form der freien Säuren wieder. Bei der Herstellung werden im allgemeinen die Salze erhalten, insbesondere die Alkalisalze wie Natrium-, Kalium- oder Lithiumsalze. Die Farbstoffe können als Pulver oder als konzentrierte wäßrige Lösungen erhalten und eingesetzt werden.

Die Herstellung der Farbstoffe (1), in denen

K =

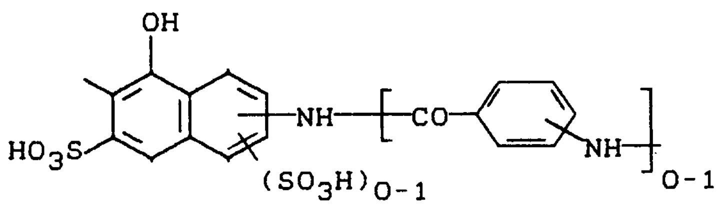

erfolgt beispielsweise nach folgendem Verfahren:

Diazotieren von Aminen $D-NH_2$ und Kuppeln der resultierenden Diazoniumverbindungen mit Aminonaphtholsulfonsäure-Derivaten der Formel (12).

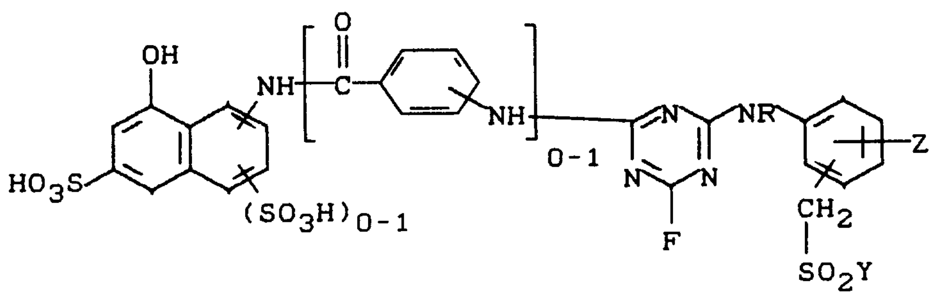

(12)

Die Darstellung der Zwischenprodukte (12) erfolgt beispielsweise, indem man Amino-naphthol-mono- bzw. disulfonsäuren oder (Aminobenzoyl)aminonaphthol-mono- bzw. disulfonsäuren an der Aminfunktion nach bekannten Methoden (z.B. EP-A-40806, DE-A-27 11 150, EP-A-172 790 oder DE-A-27 47 014) mit Trifluor-s-triazin kondensiert und die erhaltenen Difluortriazinylverbindungen mit Aminen der Formel (13)

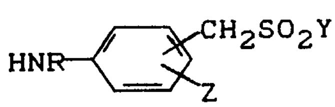

(13)

in Gegenwart säurebindender Mittel umsetzt. Einzelheiten zu weiteren Synthesemöglichkeiten können den Beispielen 1-93 entnommen werden. Beispiele für die Aminonaphtholsulfonsäuren sind:

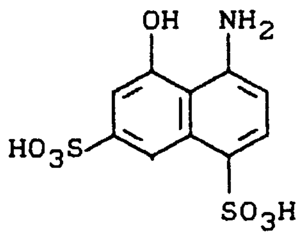

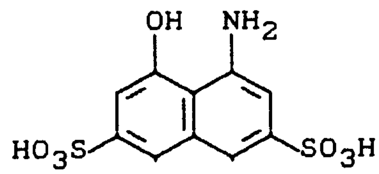

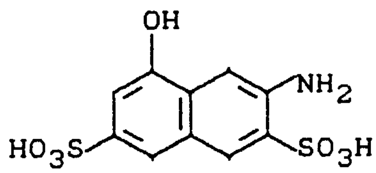

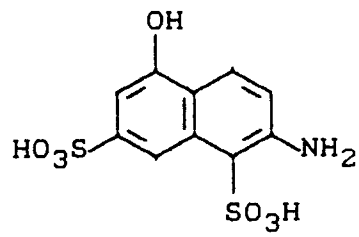

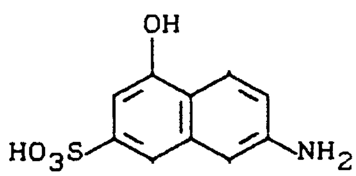

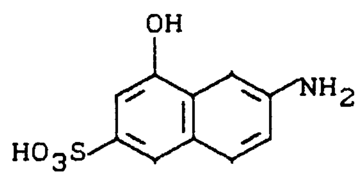

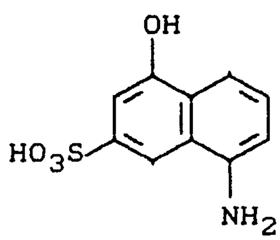

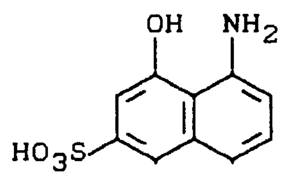

Geeignete Amine der Formel (13) sind beispielsweise:

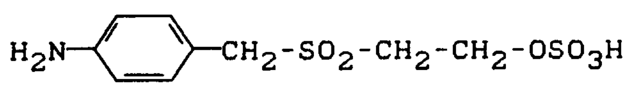

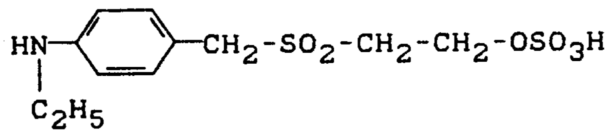

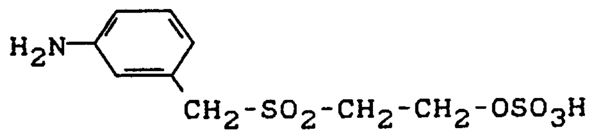

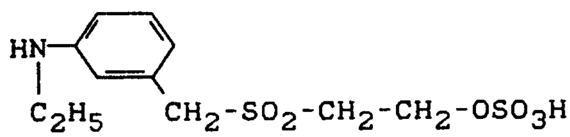

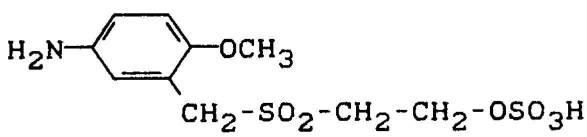

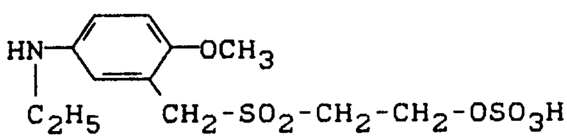

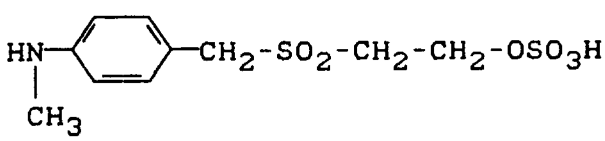

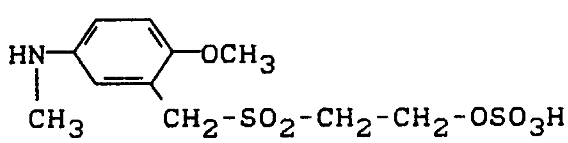

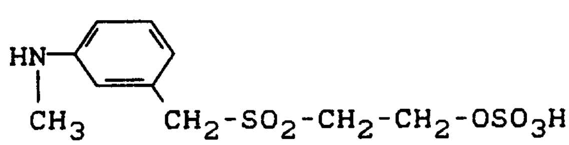

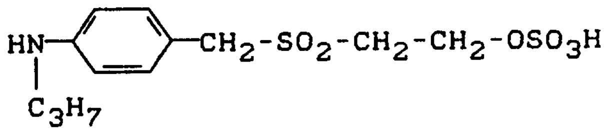

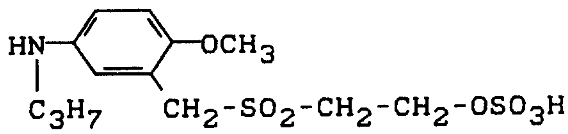

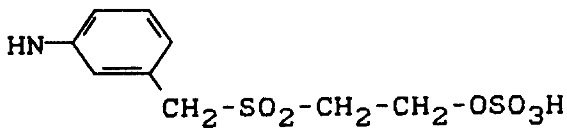

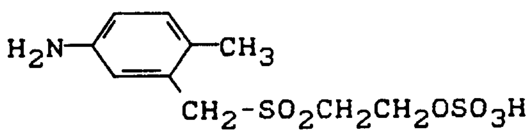

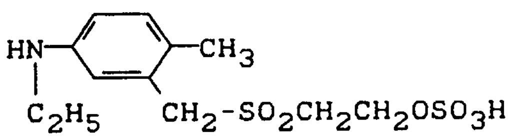

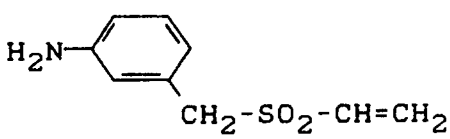

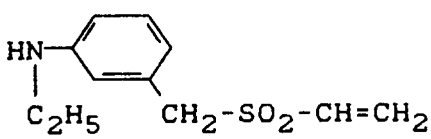

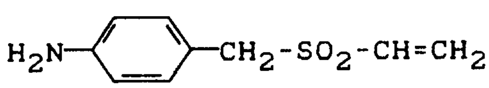

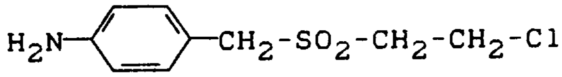

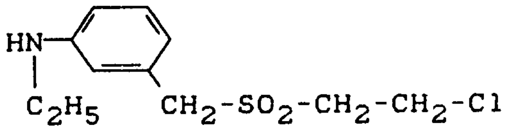

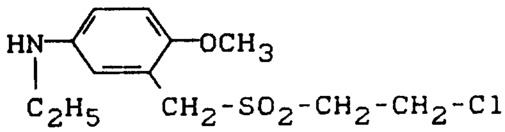

Die Herstellung der Farbstoffe (1) in denen
K =

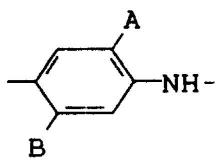

erfolgt beispielsweise nach folgenden Verfahren:

1. Durch Kondensation von Trifluor-s-triazin mit einer Farbbase der Formel (14)

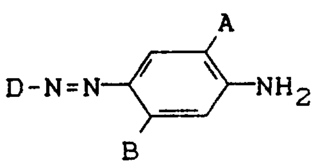

(14)

in Gegenwart säurebindender Mittel und anschließende Zweitkondensation der resultierenden Difluortriazinverbindungen der Formel (15)

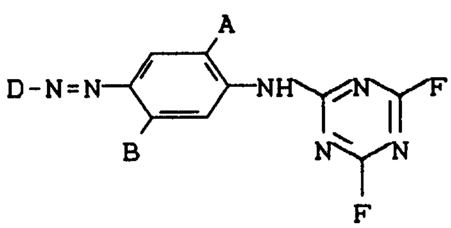

(15)

mit Aminoverbindungen der Formel (13)

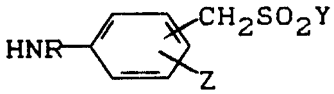

(13).

2. Durch Kondensation von Trifluor-s-triazin mit Aminoverbindungen der Formel (13) in Gegenwart säurebindender Mittel und anschließende Zweitkondensation der resultierenden Difluortriazinverbindung der Formel (16)

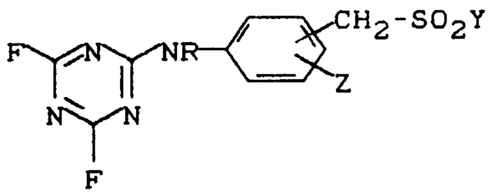

(16)

mit Farbbasen der Formel (14).

Beispiele für die Farbbasen (14) sind u.a.:

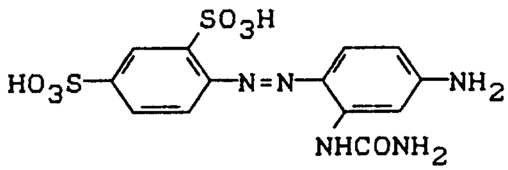

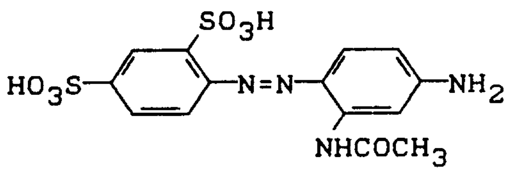

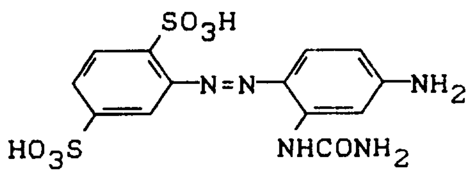

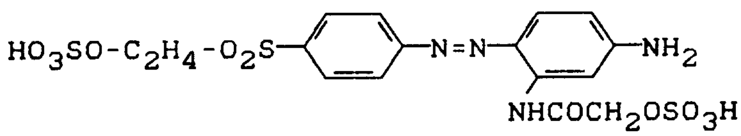

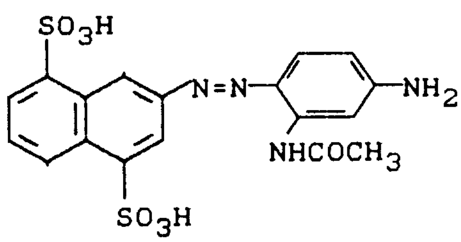

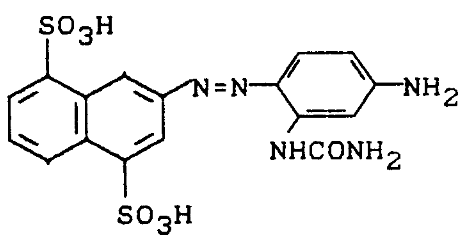

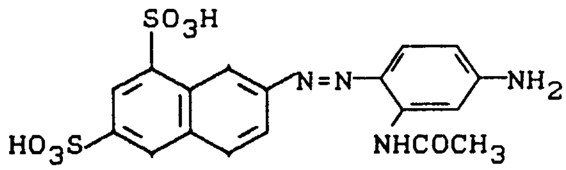

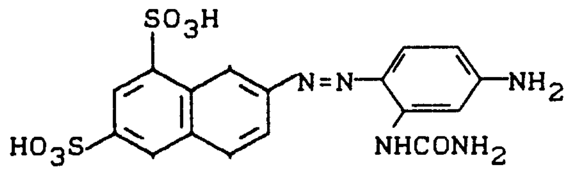

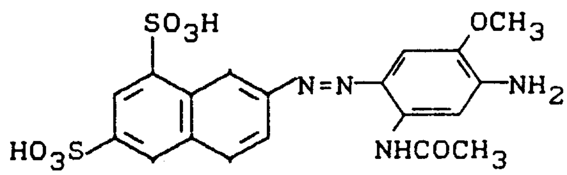

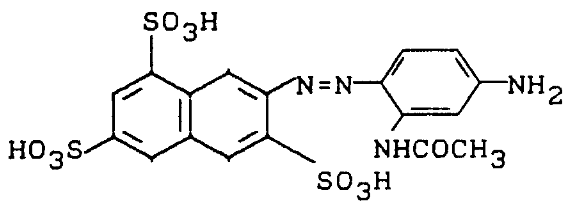

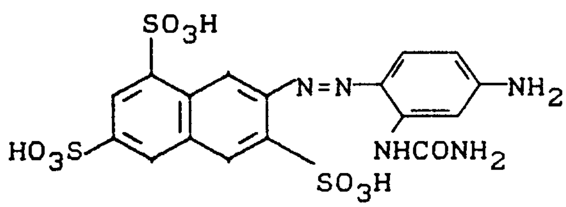

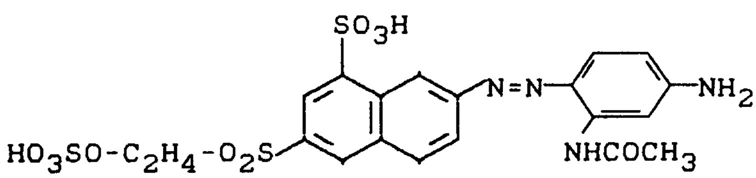

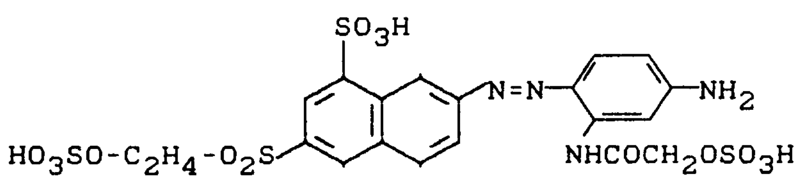

Geeignete Amine der Formel (13) sind oben bereits beispielhaft genannt.

Die erfindungsgemäßen Farbstoffe eignen sich hervorragend zum Färben und Bedrucken von natürlichen und synthetischen OH- und/oder amidgruppenhaltigen Materialien, insbesondere solche aus Cellulose und Polyamiden. Sie sind besonders geeignet zum Färben von Cellulosematerialien in Auszieh- und Klotz-Kaltverweilverfahren wie Baumwolle oder Zellwolle.

Die Farbstoffe können in Abmischung mit anderen Farbstoffen für eine Trichromie verwendet werden.

Man erhält bei gutem Aufbauvermögen und hohen Fixierausbeuten Färbungen mit guten Allgemeinechtheiten, insbesondere Naßechtheiten.

Beispiel 1

0,1 Mol der Aminoverbindung der Formel

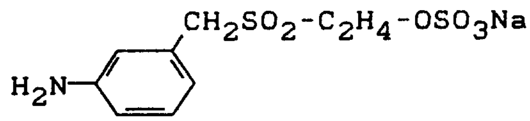

werden in 100 ml Wasser und 100 g Eis verrührt und gelöst. Nach Zusatz von 0,1 Mol Natriumhydrogencarbonat tropft man innerhalb von 10 Minuten bei 0 °C 0,11 Mol Trifluor-s-triazin zu. Man erhält ca. 250 ml einer wäßrigen Lösung des Kondensationsprodukts der Formel

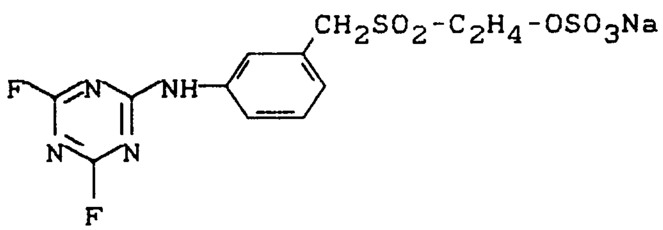

Beispiel 2

0,1 Mol 4-Amino-5-hydroxy-2,7-naphthalindisulfonsäure werden in 150 ml Wasser suspendiert und mit einer 10 %igen Lithiumhydroxidlösung neutral gelöst. Dazu fügt man die obigen Kondensationslösung (Beispiel 1) und hält dabei gleichzeitig durch Zugabe von Lithiumcarbonat den pH-Wert zwischen 4,0 bis 4,5. Nach ca. 6 Stunden bei 10 bis 20 °C ist die Zweitkondensation beendet.

0,1 Mol 2-Amino-1,5-naphthalindisulfonsäure werden in bekannter Weise diazotiert, und die resultierende Diazoniumsalzmischung bei pH 6,5-7,5 und 20 °C zur Lösung der Kupplungskomponente zugefügt. Nach Isolierung und Trocknung erhält man ca. 45 g eines salzhaltigen roten Pulvers folgender Struktur

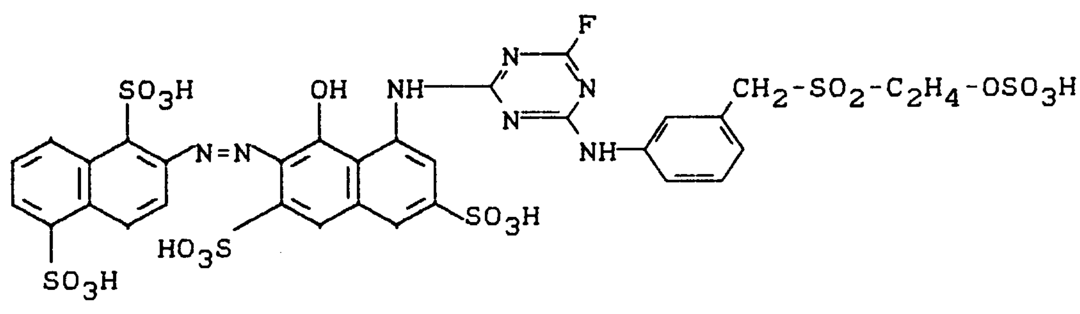

das Baumwolle nach den für Reaktivfarbstoffe üblichen Färbe- und Druckverfahren in roten Farbtönen färbt. ($\lambda_{max}$ = 517, 540 nm ($H_2O$)).

Durch Variation der Aminkomponente in Beispiel 1 sowie der Kupplungs- oder Diazokomponente in Beispiel 2 sind weitere wertvolle rote Reaktivfarbstoffe erhältlich (siehe Tabelle 1).

Tabelle 1

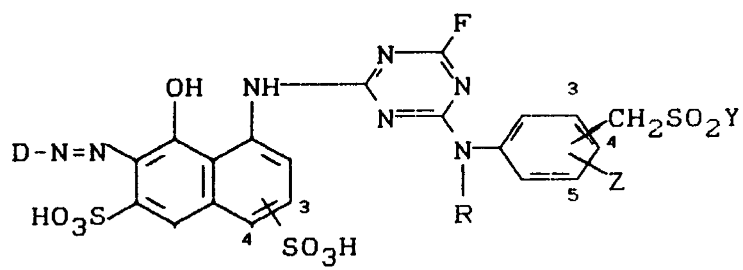

| Bsp. | D | Position $SO_3H$ | R | Z | $CH_2SO_2Y$ |
|---|---|---|---|---|---|
| 3 | 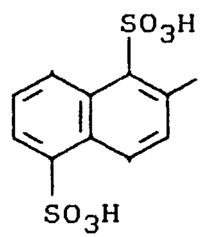 | 3 | H | H | $4-CH_2-SO_2-C_2H_4-OSO_3H$ |
| 4 | " | 3 | $C_2H_5$ | H | " |
| 5 | " | 3 | $C_2H_5$ | H | $3-CH_2-SO_2-C_2H_4-OSO_3H$ |
| 6 | " | 3 | H | $4-OCH_3$ | " |
| 7 | " | 3 | H | $4-CH_3$ | " |
| 8 | " | 3 | $C_2H_5$ | $4-OCH_3$ | " |
| 8a | " | 3 | $C_2H_5$ | $4-CH_3$ | " |

<u>Tabelle 1</u> (Fortsetzung)

| Bsp. | D | Position $SO_3H$ | R | Z | $CH_2SO_2Y$ |
|---|---|---|---|---|---|
| 9 | 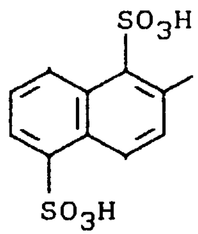 | 4 | $C_2H_5$ | H | $3-CH_2-SO_2-C_2H_4-OSO_3H$ |
| 10 | " | 4 | H | H | " |
| 11 | " | 4 | H | H | $4-CH_2-SO_2-C_2H_4-OSO_3H$ |
| 12 | " | 4 | $C_2H_5$ | H | " |
| 13 | " | 3 | H | H | $4-CH_2-SO_2-CH=CH_2$ |
| 14 | " | 3 | $C_2H_5$ | H | $4-CH_2-SO_2-CH=CH_2$ |
| 15 | " | 3 | H | H | $3-CH_2-SO_2-CH=CH_2$ |
| 16 | " | 3 | H | H | $3-CH_2-SO_2-C_2H_4-Cl$ |
| 17 | 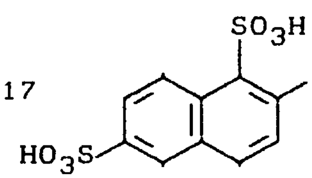 | 3 | H | H | $3-CH_2-SO_2-C_2H_4-OSO_3H$ |
| 18 | " | 3 | H | H | $4-CH_2-SO_2-C_2H_4-OSO_3H$ |
| 19 | " | 3 | $C_2H_5$ | H | $3-CH_2-SO_2-C_2H_4-OSO_3H$ |

<u>Tabelle 1</u> (Fortsetzung)

| Bsp. | D | Position $SO_3H$ | R | Z | $CH_2SO_2Y$ |
|---|---|---|---|---|---|
| 20 | 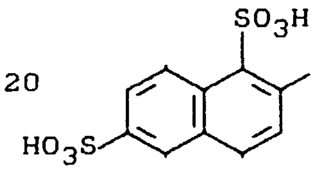 | 4 | $C_2H_5$ | H | $3-CH_2-SO_2-C_2H_4-OSO_3H$ |
| 21 | 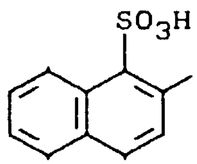 | 3 | H | H | $3-CH_2-SO_2-C_2H_4-OSO_3H$ |
| 22 | " | 4 | H | H | " |
| 23 | " | 3 | $C_2H_5$ | H | " |
| 24 | " | 3 | $C_2H_5$ | H | $4-CH_2-SO_2-C_2H_4-OSO_3H$ |
| 25 | " | 3 | H | $4-OCH_3$ | $3-CH_2-SO_2-C_2H_4-OSO_3H$ |
| 26 | 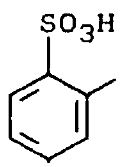 | 3 | H | H | " |
| 26a | " | 3 | H | $4-CH_3$ | " |

Tabelle 1 (Fortsetzung)

| Bsp. | D | Position $SO_3H$ | R | Z | $CH_2SO_2Y$ |
|---|---|---|---|---|---|
| 27 | 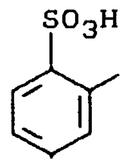 | 3 | H | H | $4-CH_2-SO_2-C_2H_4-OSO_3H$ |
| 28 | " | 3 | $C_2H_5$ | H | " |
| 29 | " | 3 | $CH_2CH_2CO_2H$ | H | " |
| 30 | " | 3 | $C_2H_5$ | H | $3-CH_2-SO_2-C_2H_4-OSO_3H$ |
| 31 | " | 4 | H | H | " |
| 32 | 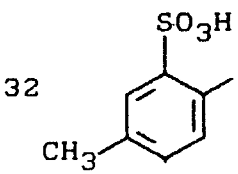 | 3 | H | H | " |
| 33 | " | 3 | $C_2H_5$ | H | " |
| 34 | " | 3 | H | H | $4-CH_2-SO_2-C_2H_4-OSO_3H$ |

Tabelle 1 (Fortsetzung)

| Bsp. | D | Position $SO_3H$ | R | Z | $CH_2SO_2Y$ |
|---|---|---|---|---|---|
| 34a | 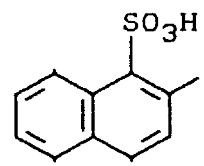 | 3 | H | H | $3-CH_2-SO_2-C_2H_4-OSO_3H$ |
| 34b | " | 3 | H | $4-CH_3$ | " |
| 34c | " | 3 | $C_2H_5$ | $4-CH_3$ | " |
| 34d | " | 3 | $C_2H_5$ | $4-OCH_3$ | " |
| 35 | 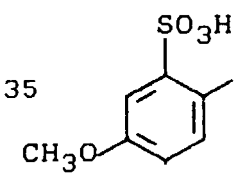 | 3 | H | H | $4-CH_2-SO_2-C_2H_4-OSO_3H$ |
| 36 | 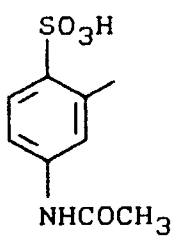 | 3 | H | H | $3-CH_2-SO_2-C_2H_4-OSO_3H$ |
| 37 | " | 3 | $C_2H_5$ | H | " |

Tabelle 1 (Fortsetzung)

| Bsp. | D | Position $SO_3H$ | R | Z | $CH_2SO_2Y$ |
|---|---|---|---|---|---|
| 38 | 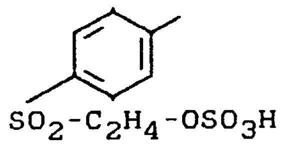 | 3 | H | H | $3-CH_2-SO_2-C_2H_4-OSO_3H$ |
| 39 | 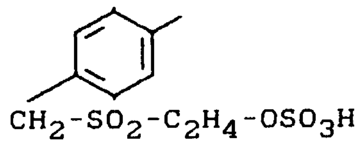 | 3 | H | H | $4-CH_2-SO_2-C_2H_4-OSO_3H$ |
| 40 | " | 3 | $C_2H_5$ | H | " |
| 41 | 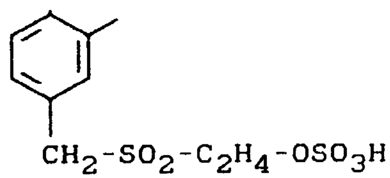 | 3 | H | H | $3-CH_2-SO_2-C_2H_4-OSO_3H$ |
| 42 | 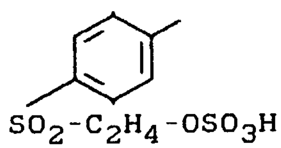 | 3 | H | H | $4-CH_2-SO_2-C_2H_4-OSO_3H$ |
| 43 | " | 3 | $CH_2CH_2CO_2H$ | H | " |

**Tabelle 1 (Fortsetzung)**

| Bsp. | D | Position $SO_3H$ | R | Z | $CH_2SO_2Y$ |
|---|---|---|---|---|---|
| 44 | 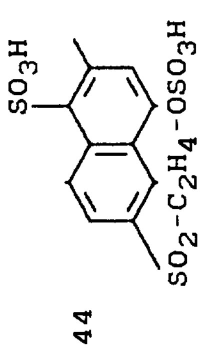 | 3 | H | H | $4-CH_2-SO_2-C_2H_4-OSO_3H$ |
| 45 | " | 2 | H | H | $3-CH_2-SO_2-C_2H_4-OSO_3H$ |
| 46 | " | 3 | $C_2H_5$ | H | " |
| 47 | " | 3 | $C_2H_5$ | H | $4-CH_2-SO_2-C_2H_4-OSO_3H$ |
| 48 | " | 4 | $C_2H_5$ | H | " |

Die Farbstoffbeispiele 2 bis 48 sind auch nach folgender Synthesesequenz zugänglich:
Zunächst werden 0,1 Mol 4-Amino-5-hydroxy-2,7 (bzw. 1,7)-naphthalindisulfonsäure mit 0,11 Mol Cyanurfluorid bei 0 °C und pH 4,0 bis 4,5 in bekannter Weise kondensiert, und das Monokondensationsprodukt anschließend mit 0,1 Mol der Aminkomponente in ansteigendem Temperaturbereich zwischen 0 bis 20 °C und bei pH 4,0 bis 6,5 umgesetzt. Die pH-Steuerung erfolgt mittels wäßriger Sodalösung oder Kaliumhydrogencarbonatlösung. Im letzten Schritt der Reaktionsfolge werden dann bei 10 is 20 °C und pH 6,5 bis 7,5 entsprechende Diazoniumsalze (0,1 Mol) auf das Biskondensationsprodukt gekuppelt. Die Isolierung der

Farbstoffe erfolgt dann wie in Beispiel 2 beschrieben.

Verwendet man in Beispiel 2 anstelle von 4-Amino-5-hydroxy-2,7 (bzw. 1,7)-naphthalindisulfonsäure die entsprechenden N-(4-Aminobenzoyl)-Derivate, so sind folgende Rotfarbstoffe erhältlich:

Beispiel 49

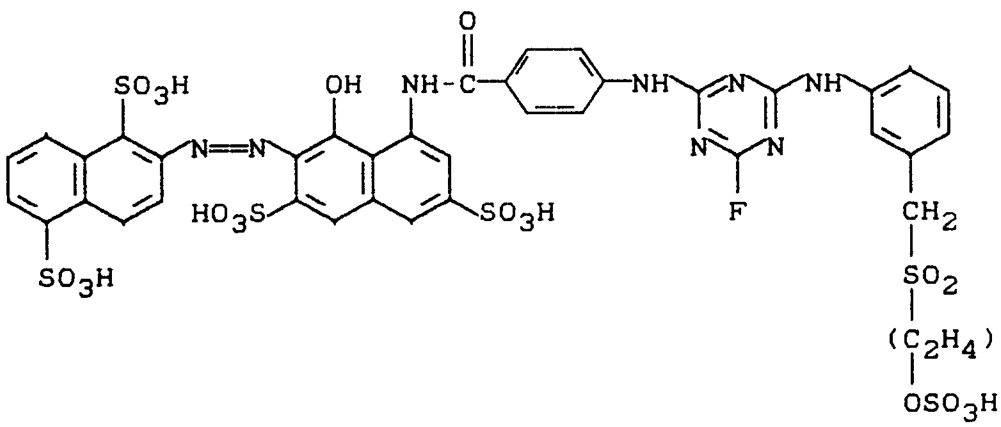

Beispiel 50

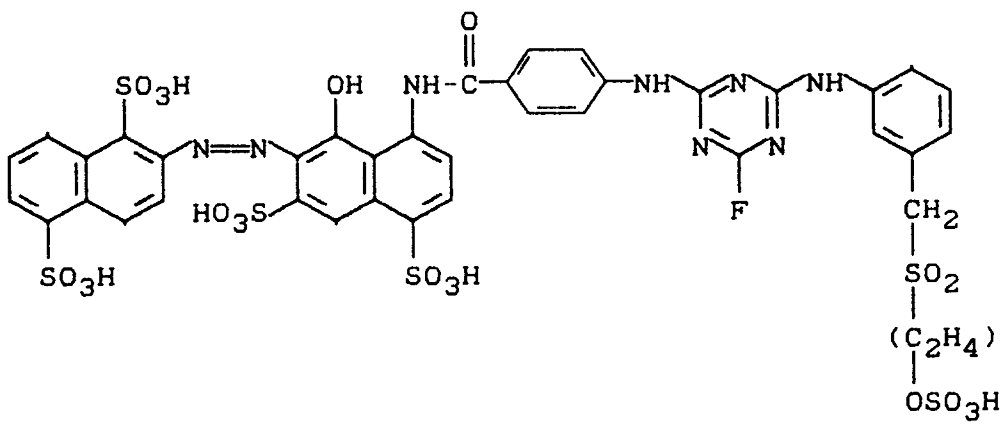

Nimmt man obige Variation an Beispiel 26 vor, so resultiert ein ebenfalls wertvoller roter Reaktivfarbstoff.

Beispiel 51

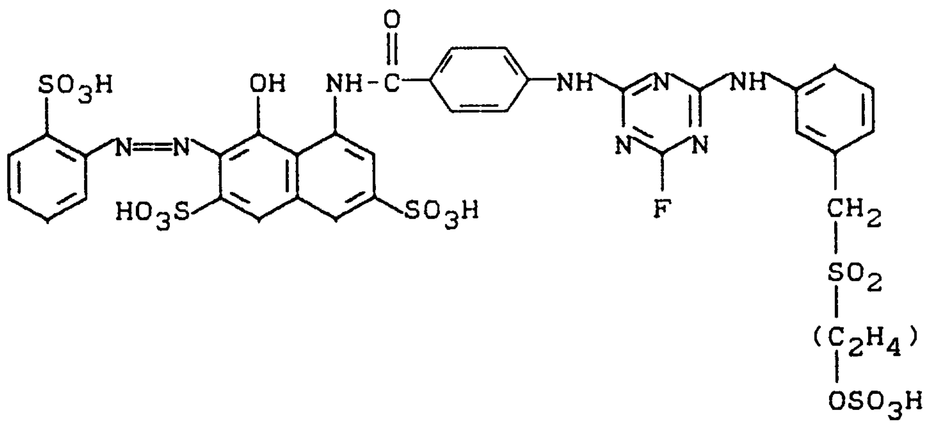

Beispiel 52

0,1 Mol der Monoazoverbindung der Formel

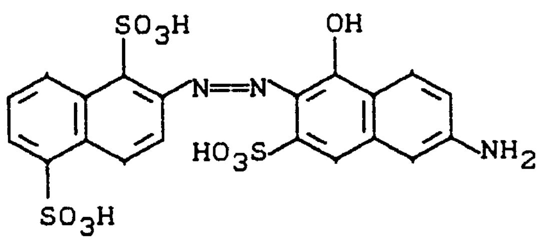

werden in 500 ml Wasser neutral gelöst. Zu dieser Lösung fügt man die eiskalte Kondensationslösung aus Beispiel 1 und hält mit 20 %iger Sodalösung den pH-Wert konstant zwischen 6,5 bis 7,0. Nach ca. 6 Stunden Rühren bei 10 bis 25 °C und pH 7,0 fällt man den Farbstoff durch Zugabe von Kochsalz aus, isoliert durch Absaugen und trocknet. Man erhält ca. 60 g eines salzhaltigen roten Farbstoffpulvers, dem die Formel

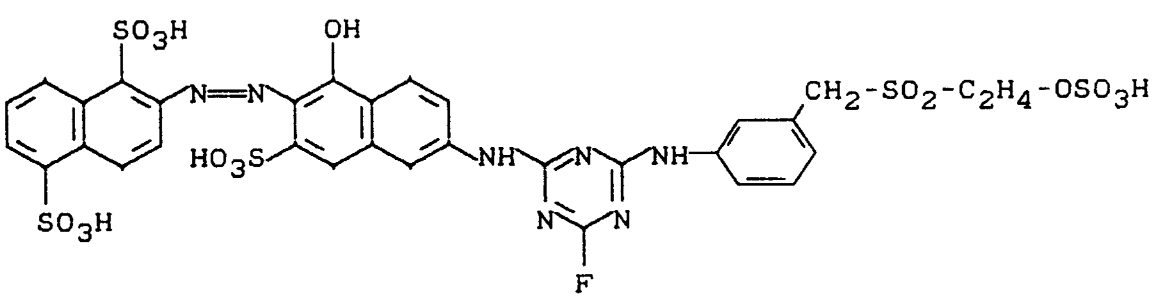

zukommt und das Baumwolle in orangeroten Farbtönen färbt (485 nm). Durch Variation der Aminkomponente in Beispiel 1 sowie der Kupplungs- oder Diazokomponente in Beispiel 52 sind weitere wertvolle orangene und scharlachrote Reaktivfarbstoffe erhältlich (Tabelle 2).

Tabelle 2

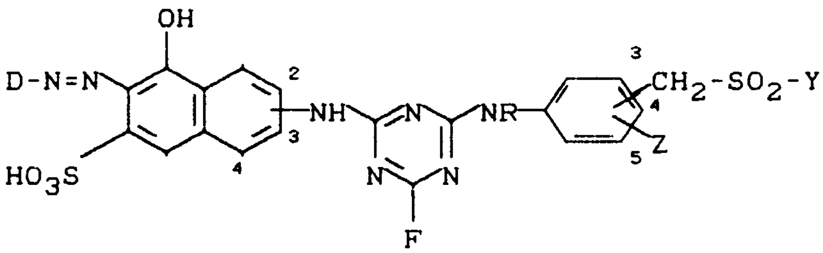

| Bsp. | D | Position-NH- | R | Z | $-CH_2SO_2-Y$ |
|---|---|---|---|---|---|
| 53 | 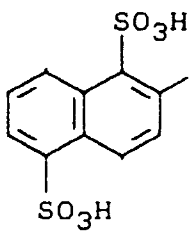 | 3 | H | H | $4-CH_2-SO_2-C_2H_4-OSO_3H$ |
| 54 | " | 3 | $C_2H_5$ | H | " |
| 55 | " | 3 | $C_2H_5$ | H | $3-CH_2-SO_2-C_2H_4-OSO_3H$ |
| 56 | " | 3 | H | $4-OCH_3$ | " |
| 57 | " | 3 | H | $4-CH_3$ | " |
| 58 | 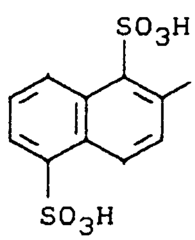 | 2 | H | H | $3-CH_2-SO_2-C_2H_4-OSO_3H$ |
| 59 | " | 2 | $C_2H_5$ | H | " |
| 60 | " | 2 | $C_2H_5$ | H | $4-CH_2SO_2-C_2H_4-OSO_3H$ |

Tabelle 2 (Fortsetzung)

| Bsp. | D | Position-NH- | R | Z | $-CH_2SO_2-Y$ |
|---|---|---|---|---|---|
| 61 | 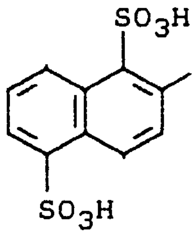 | 2 | H | H | $4-CH_2SO_2-C_2H_4-OSO_3H$ |
| 62 | " | 2 | H | H | $4-CH_2SO_2-CH=CH_2$ |
| 63 | " | 2 | H | H | $3-CH_2SO_2-CH=CH_2$ |
| 64 | " | 4 | H | H | $3-CH_2SO_2-C_2H_4-OSO_3H$ |
| 65 | 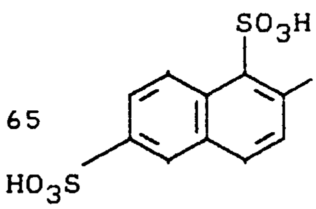 | 3 | H | H | " |
| 66 | 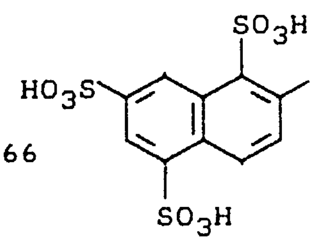 | 3 | H | H | " |
| 66a | " | 3 | $C_2H_5$ | H | " |
| 66b | " | 3 | H | $4-OCH_3$ | " |
| 67 | 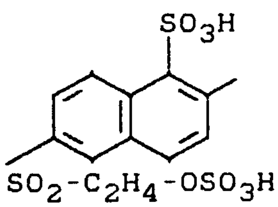 | 2 | H | H | " |

Tabelle 2 (Fortsetzung)

| Bsp. | D | Position-NH- | R | Z | $-CH_2SO_2-Y$ |
|---|---|---|---|---|---|
| 68 | 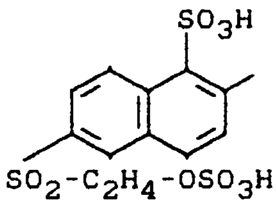 | 3 | H | H | $3-CH_2SO_2-C_2H_4-OSO_3H$ |
| 69 | " | 3 | H | H | $4-CH_2-SO_2-C_2H_4-OSO_3H$ |
| 70 | " | 3 | $C_2H_5$ | H | " |
| 71 | " | 2 | $C_2H_5$ | H | " |
| 72 | 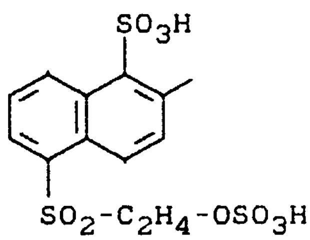 | 2 | H | H | " |
| 73 | 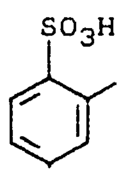 | 3 | H | H | $3-CH_2-SO_2-C_2H_4-OSO_3H$ |
| 74 | " | 3 | H | H | $4-CH_2-SO_2-C_2H_4-OSO_3H$ |
| 75 | 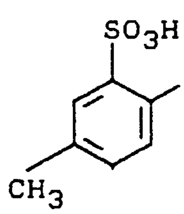 | 3 | H | H | " |

Tabelle 2 (Fortsetzung)

| Bsp. | D | Position-NH- | R | Z | $-CH_2SO_2-Y$ |
|---|---|---|---|---|---|
| 76 | 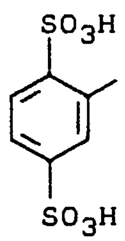 | 3 | H | H | $4-CH_2-SO_2-C_2H_4-OSO_3H$ |
| 77 | " | 3 | $C_2H_5$ | H | $3-CH_2-SO_2-CH=CH_2$ |
| 78 | 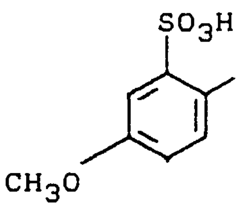 | 3 | H | H | $3-CH_2-SO_2-C_2H_4-OSO_2H$ |
| 78a | " | 3 | H | $4-OCH_3$ | " |
| 78b | " | 3 | $C_2H_5$ | $4-OCH_3$ | " |
| 78c | " | 3 | H | $4-CH_3$ | " |
| 79 | " | 3 | H | H | $4-CH_2-SO_2-C_2H_4-OSO_2H$ |
| 80 | " | 3 | $C_2H_5$ | H | " |
| 81 | " | 3 | $C_2H_5$ | H | $3-CH_2-SO_2-C_2H_4-OSO_3H$ |
| 81a | " | 3 | $C_2H_5$ | $4-CH_3$ | " |

Tabelle 2 (Fortsetzung)

| Bsp. | D | Position-NH- | R | Z | $-CH_2SO_2-Y$ |
|---|---|---|---|---|---|
| 82 | 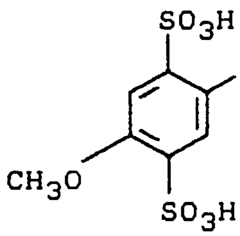 | 3 | H | H | $3-CH_2-SO_2-C_2H_4-OSO_3H$ |
| 83 | " | 3 | $C_2H_5$ | H | " |
| 83a | " | 3 | H | $4-CH_3$ | " |
| 83b | " | 3 | H | $4-OCH_3$ | " |
| 83c | " | 3 | $C_2H_5$ | $4-CH_3$ | " |
| 83d | " | 3 | $C_2H_5$ | $4-OCH_3$ | " |
| 84 | 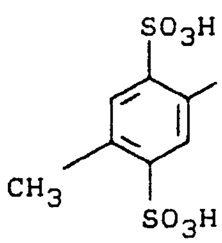 | 3 | H | H | $3-CH_2-SO_2-C_2H_4-OSO_3H$ |
| 85 | " | 3 | H | H | $4-CH_2-SO_2-C_2H_4-OSO_3H$ |

Tabelle 2 (Fortsetzung)

| Bsp. | D | Position-NH- | R | Z | $-CH_2SO_2-Y$ |
|---|---|---|---|---|---|
| 86 | 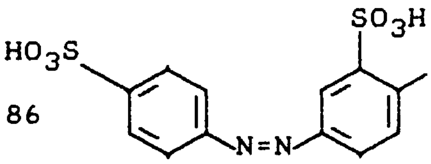 | 3 | H | H | $4-CH_2-SO_2-C_2H_4-OSO_3H$ |
| 87 | " | 3 | H | H | $3-CH_2-SO_2-C_2H_4-OSO_3H$ |
| 88 | " | 3 | $C_2H_5$ | H | " |
| 88a | " | 3 | $C_2H_5$ | H | $4-CH_2-SO_2-C_2H_4-OSO_3H$ |
| 89 | 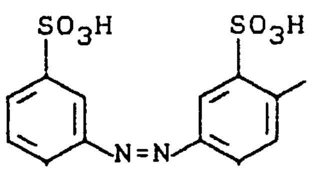 | 3 | H | H | $3-CH_2-SO_2-C_2H_5-OSO_3H$ |
| 90 | " | 2 | H | H | " |
| 91 | 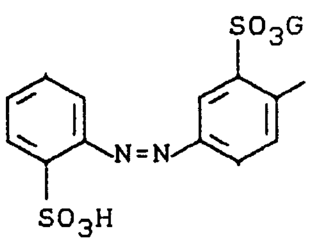 | 3 | H | H | " |
| 92 | 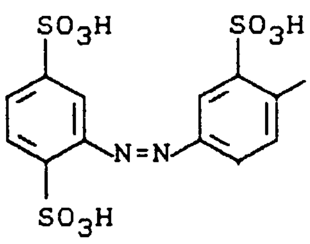 | 3 | H | H | " |

Tabelle 2 (Fortsetzung)

| Bsp. | D | Position-NH- | R | Z | $-CH_2SO_2-Y$ |
|---|---|---|---|---|---|
| 93 | 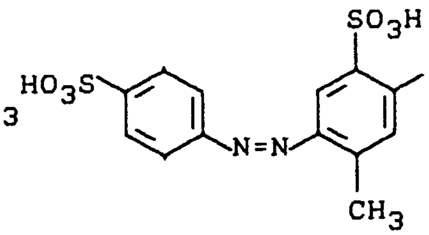 | 3 | H | H | $3-CH_2-SO_2-C_2H_5-OSO_3H$ |

Die Farbstoffbeispiele 52 bis 93 sind auch nach folgender Synthesesequenz zugänglich:
Zunächst werden 0,1 Mol Amino-4-hydroxy-2-naphthalinsulfonsäure mit der Kondensationslosung aus Beispiel 1 bei 0 °C und pH 4,5 umgesetzt. Während der ca. 3-stündigen Reaktionszeit kann die Reaktionstemperatur durchaus auf Raumtemperatur ansteigen. Bei pH 6,5-7,5 (Sodalösung) werden dann entsprechende Diazoniumsalze (jeweils 0,1 Mol) auf die farblosen Biskondensationsprodukte gekuppelt. Die Farbstoffe werden durch Aussalzen und Abnutschen isoliert.

Farbstoffmischungen, z.B. eine Mischung aus Beispiel 2 und 3, sind erhältlich, indem man in Beispiel 1 anstelle von 3-[(2-Sulfatoethylsulfonyl)methyl]anilin eine Mischung der beiden Isomeren, nämlich 3- und 4-[-(2-Sulfatoethylsulfonyl)methyl]anilin einsetzt.

Beispiel 94

23,6 g 7-Amino-1,3-naphthalindisulfonsäure-mono-Natriumsalz werden in 150 ml Wasser/30 g Eis und 20 ml konzentrierter Salzsäure angerührt und bei 5 bis 10 °C tropfenweise mit einer wäßrigen Natriumnitritlösung versetzt. Nach einer Stunde Rühren bei 5° bis 10 °C wird die überschüssige salpetrige Säure mit Amidosulfonsäure entfernt.

Diese cremefarbene Suspension dosiert man nun innerhalb von 30 Minuten zu einer neutralen Lösung der Kupplungskomponente, die aus 13,5 g N-(3-Aminophenyl)acetamidhydrochlorid, 50 ml Wasser, 50 g Eis und ca. 30 ml einer 10 %igen wäßrigen Lithiumhydroxidlösung bereitet worden war. Dabei hält man den pH-Wert der Reaktionsmischung mit 20 %iger wäßriger Kaliumhydrogencarbonatlösung konstant bei 6,0 bis 6,5 bei maximal 10 °C. Nach erfolgter Zugabe rührt man 30 Minuten nach, wobei man den pH-Wert weiterhin konstant hält.

Zu dieser orangefarbenen Kupplungslösung fügt man nun soviel Eis, bis eine Temperatur von 0 °C erreicht ist. Es wird zügig mit 12 g Cyanurfluorid versetzt und dabei gleichzeitig der pH-Wert durch Zugabe einer 20 %igen Kaliumhydrogencarbonatlösung konstant bei 6,0 bis 6,2 gehalten. Die Kondensation ist nach 10 Minuten beendet. Zu dieser Mischung dosiert man nun langsam eine neutrale Lösung von 21,5 g 3-[(2-Sulfatoethylsulfonyl)methyl]anilin in 100 ml Wasser und hält dabei den pH-Wert durch Zugabe von 20 %iger Sodalösung konstant zwischen 6,5 bis 7,0. Anschließend erwärmt man die Reaktionsmischung innerhalb von 2 Stunden und unter weiterer pH-Kontrolle (6,5 bis 7,0) auf 20 °C. Nach Isolierung und Trocknen resultieren 65 g eines orangeroten Pulvers ($\lambda_{max}$ = 389 nm ($H_2O$)) der Struktur

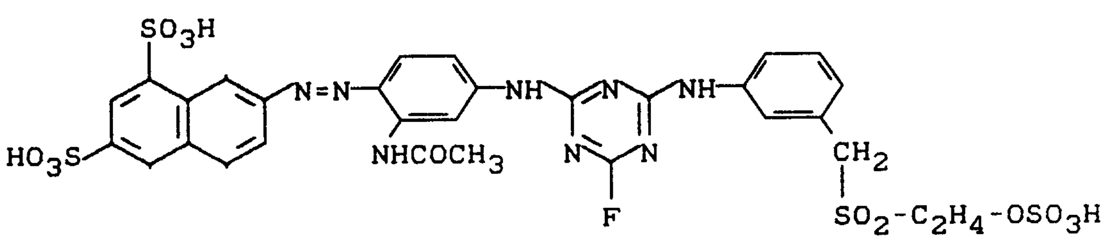

das Baumwolle in rotstichig gelben Farbtönen färbt.

Zum gleichen Farbstoff gelangt man auch, wenn man zunächst 11 g Cyanurfluorid mit 21,5 g 3-[(2-Sulfatoethylsulfonyl)methyl]anilin in 150 ml Wasser/50 g Eis bei 0 °C und konstantem pH 6,0 kondensiert und das resultierende Kondensationsprodukt mit der obengenannten Kupplungslösung umsetzt.

Durch Variation der Diazokomponente D-$NH_2$, der anilinischen Kupplungskomponente mit A und B sowie der Aminoverbindung mit Sulfonylmethyl-Struktur sind in Analogie zu Beispiel 94 weitere wertvolle Reaktivfarbstoffe der Formel

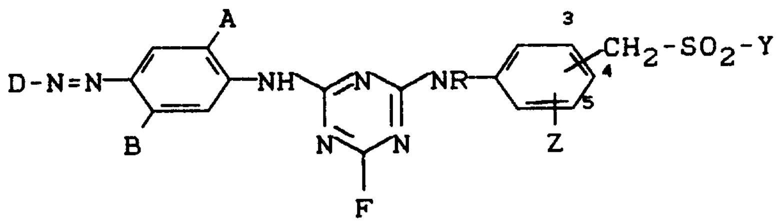

zugänglich, z.B. die in nachfolgender Tabelle.

Farbstoffmischungen, z.B. eine Mischung aus Beispiel 1 und 3, sind erhältlich, indem man in Beispiel 1 anstelle von 3-[(2-Sulfatoethylsulfonyl)methyl]anilin eine Mischung der beiden Isomeren, nämlich 3- und 4-[-(2-Sulfatoethylsulfonyl)methyl]anilin einsetzt.

| Bsp. | D | B | A | R | Z | $-CH_2-SO_2-Y$ |
|---|---|---|---|---|---|---|
| 95 | 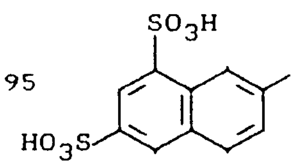 | $NHCOCH_3$ | H | $C_2H_5$ | H | $3-CH_2SO_2-C_2H_4-OSO_3H$ |
| 96 | " | " | H | H | H | $4-CH_2-SO_2-C_2H_4-OSO_3H$ |
| 97 | " | " | H | $C_2H_5$ | H | " |
| 98 | " | " | $OCH_3$ | $C_2H_5$ | H | " |
| 99 | " | $NHCOCH_2OSO_3H$ | H | H | H | $3-CH_2-SO_2-CH=CH_2$ |
| 100 | " | $NHCOCH_3$ | H | H | $4-OCH_3$ | $3-CH_2SO_2-C_2H_4-OSO_3H$ |
| 101 | " | $NHCONH_2$ | H | $C_2H_5$ | H | " |
| 102 | " | $CH_3$ | H | H | H | $4-CH_2SO_2-C_2H_4-OSO_3H$ |
| 103 | " | H | $OCH_3$ | $C_2H_5$ | H | " |
| 104 | " | $NHCOCH_2OH$ | H | H | $4-CH_3$ | $3-CH_2SO_2-C_2H_4-OSO_3H$ |

| Bsp. | D | B | A | R | Z | $-CH_2-SO_2-Y$ |
|---|---|---|---|---|---|---|
| 105 | 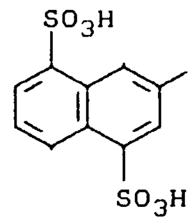 | $NHCOCH_3$ | H | H | H | $4-CH_2SO_2-C_2H_4-OSO_3H$ |
| 106 | " | " | H | $C_2H_5$ | H | " |
| 107 | " | " | H | $C_2H_5$ | $4-OCH_3$ | $3-CH_2SO_2-C_2H_4-OSO_3H$ |
| 108 | " | " | H | H | H | " |
| 109 | " | $OCH_3$ | $OCH_3$ | H | H | " |
| 110 | " | $NHCONH_2$ | H | $C_2H_5$ | H | $3-CH_2SO_2-C_2H_4-OSO_3H$ |
| 111 | 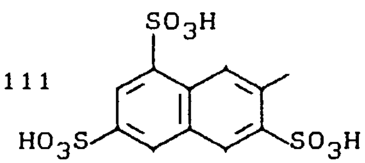 | $NHCOCH_3$ | H | H | H | $3-CH_2SO_2-C_2H_4-OSO_3H$ |
| 112 | " | " | H | H | $4-OCH_3$ | " |
| 113 | " | " | H | $C_2H_5$ | H | " |
| 114 | " | " | H | H | H | $4-CH_2SO_2-C_2H_4-OSO_3H$ |

| Bsp. | D | B | A | R | Z | $-CH_2-SO_2-Y$ |
|---|---|---|---|---|---|---|
| 115 | 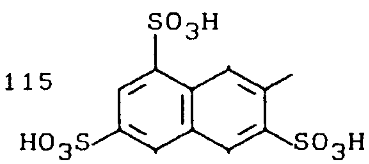 | $NHCOCH_3$ | H | $C_2H_5$ | H | $4-CH_2SO_2-C_2H_4-OSO_3H$ |
| 116 | " | $NHCONH_2$ | H | $C_2H_5$ | H | " |
| 117 | " | " | H | H | H | " |
| 118 | " | " | H | H | H | $3-CH_2SO_2-C_2H_4-OSO_3H$ |
| 119 | " | " | H | $C_2H_5$ | H | " |
| 120 | " | " | H | $C_2H_5$ | $4-OCH_3$ | $3-CH_2-SO_2-CH=CH_2$ |
| 121 | " | " | H | H | H | $3-CH_2SO_2-C_2H_4-OSO_3H$ |
| 122 | 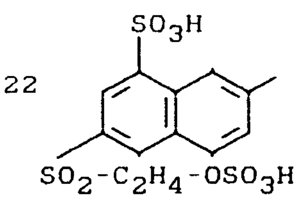 | $NHCOCH_3$ | H | $C_2H_5$ | H | $3-CH_2SO_2-C_2H_4-OSO_3H$ |
| 123 | " | $NHCOCH_2OSO_3H$ | H | H | H | " |
| 124 | " | " | H | H | H | $4-CH_2SO_2-C_2H_4-OSO_3H$ |
| 125 | " | $NHCO-C_2H_4-SO_3H$ | H | $C_2H_5$ | H | " |

| Bsp. | D | B | A | R | Z | $-CH_2-SO_2-Y$ |
|---|---|---|---|---|---|---|
| 126 | 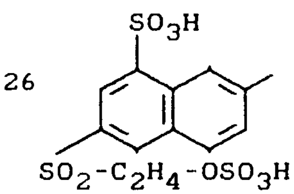 | $OCH_3$ | H | $CH_2CH_2CO_2H$ | H | $4-CH_2SO_2-C_2H_4-OSO_3H$ |
| 127 | " | $CH_2-SO_3H$ | H | H | H | " |
| 128 | 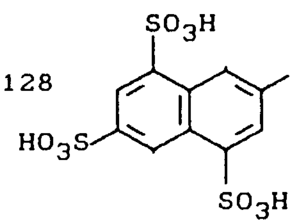 | $NHCOCH_3$ | H | H | H | $3-CH_2SO_2-C_2H_4-OSO_3H$ |
| 129 | " | " | H | $C_2H_5$ | H | " |
| 130 | " | " | H | H | H | $4-CH_2SO_2-C_2H_4-OSO_3H$ |
| 131 | " | $NHCONH_2$ | H | H | H | " |
| 132 | " | " | H | $C_2H_5$ | H | " |
| 133 | " | " | H | H | $4-OCH_3$ | $3-CH_2SO_2-C_2H_4-OSO_3H$ |
| 134 | " | " | H | H | H | " |

| Bsp. | D | B | A | R | Z | $-CH_2-SO_2-Y$ |
|---|---|---|---|---|---|---|
| 135 | 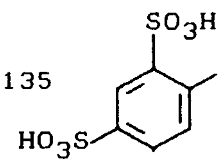 | $NHCONH_2$ | H | H | H | $3-CH_2SO_2-C_2H_4-OSO_3H$ |
| 136 | " | " | H | H | $4-OCH_3$ | " |
| 137 | " | " | H | $C_2H_5$ | H | " |
| 138 | " | " | H | H | H | $4-CH_2SO_2-C_2H_4-OSO_3H$ |
| 139 | " | $NHCOCH_3$ | H | H | H | " |
| 140 | " | " | H | H | H | $3-CH_2SO_2-C_2H_4-OSO_3H$ |
| 141 | " | " | H | $C_2H_5$ | H | " |
| 142 | 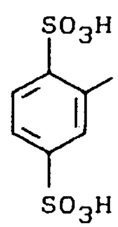 | $NHCONH_2$ | H | H | H | " |
| 143 | " | " | H | H | H | $4-CH_2SO_2-C_2H_4-OSO_3H$ |
| 144 | " | " | H | $C_2H_5$ | H | " |

| Bsp. | D | B | A | R | Z | $-CH_2-SO_2-Y$ |
|---|---|---|---|---|---|---|
| 145 | 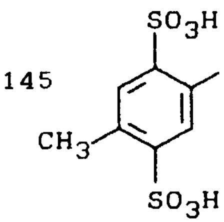 | $NHCOCH_3$ | H | H | H | $4-CH_2SO_2-C_2H_4-OSO_3H$ |
| 146 | " | " | H | H | H | $3-CH_2SO_2-C_2H_4-OSO_3H$ |
| 147 | " | $NHCONH_2$ | H | $C_2H_5$ | H | " |
| 148 | " | " | H | H | H | $4-CH_2SO_2-C_2H_4-OSO_3H$ |
| 149 | 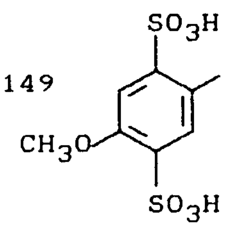 | $NHCOCH_3$ | H | H | H | $4-CH_2SO_2-C_2H_4-OSO_3H$ |
| 150 | " | " | H | H | H | $3-CH_2SO_2-C_2H_4-OSO_3H$ |
| 151 | " | $NHCONH_2$ | H | $C_2H_5$ | H | " |
| 152 | " | " | H | H | H | $4-CH_2SO_2-C_2H_4-OSO_3H$ |
| 153 | " | $OCH_3$ | $OCH_3$ | H | H | " |

| Bsp. | D | B | A | R | Z | $-CH_2-SO_2-Y$ |
|---|---|---|---|---|---|---|
| 154 | 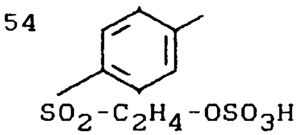 | $NHCOCH_2OSO_3H$ | H | H | H | $3-CH_2SO_2-C_2H_4-OSO_3H$ |
| 155 | " | " | H | $C_2H_5$ | H | " |
| 156 | " | $NHCOCH_2CH_2SO_3H$ | H | H | H | $4-CH_2SO_2-C_2H_4-OSO_3H$ |
| 157 | " | $CH_2SO_3H$ | H | $C_2H_5$ | H | " |
| 158 | 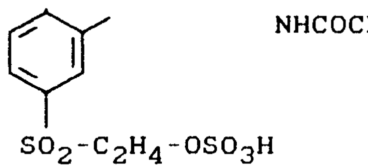 | $NHCOCH_2OSO_3H$ | H | H | H | $4-CH_2SO_2-C_2H_4-OSO_3H$ |
| 159 | " | " | H | H | H | $3-CH_2SO_2-C_2H_4-OSO_3H$ |
| 160 | 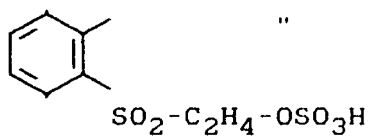 | " | H | H | H | " |
| 161 | 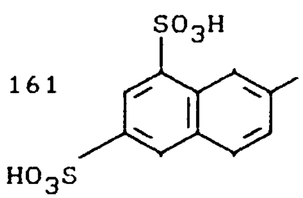 | $NHCOCH_3$ | H | H | $4-CH_3$ | " |

| Bsp. | D | B | A | R | Z | $-CH_2-SO_2-Y$ |
|---|---|---|---|---|---|---|
| 162 | 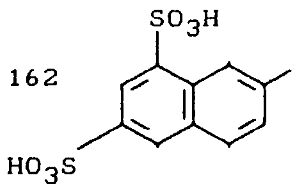 | $NHCOCH_3$ | H | $C_2H_5$ | $4-OCH_3$ | $3-CH_2SO_2-C_2H_4-OSO_3H$ |
| 163 | " | $NHCOCH_3$ | H | $C_2H_5$ | $4-CH_3$ | " |
| 164 | 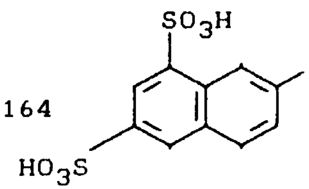 | $NHCONH_2$ | H | H | H | $3-CH_2-SO_2-C_2H_4-OSO_3H$ |
| 165 | 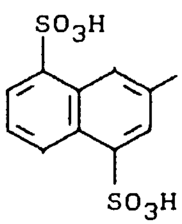 | $NHCOCH_3$ | H | H | $4-CH_3$ | $3-CH_2-SO_2-C_2H_4-OSO_3H$ |
| 166 | " | " | H | H | $4-OCH_3$ | $3-CH_2-SO_2-C_2H_4-OSO_3H$ |
| 167 | " | " | H | $C_2H_5$ | H | $4-CH_2-SO_2-C_2H_4-OSO_3H$ |
| 168 | " | " | H | $C_2H5$ | $4-CH_3$ | $3-CH_2-SO_3-C_2H_4-OSO_3H$ |

| Bsp. | D | B | A | R | Z | $-CH_2-SO_2-Y$ |
|---|---|---|---|---|---|---|
| 169 | 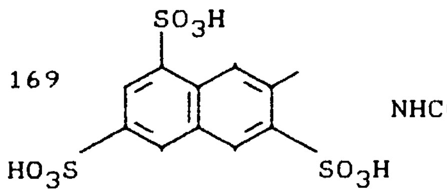 | $NHCOCH_3$ | H | H | $4-CH_3$ | $3-CH_2-SO_2-C_2H_4-OSO_3H$ |
| 170 | " | $NHCOCH_3$ | H | $C_2H_5$ | $4-CH_3$ | " |
| 171 | " | $NHCOCH_3$ | H | $C_2H_5$ | $4-OCH_3$ | $3-CH_2-SO_2-C_2H_4-OSO_3H$ |
| 172 | " | $NHCONH_2$ | H | H | $4-CH_3$ | $3-CH_2-SO_2-C_2H_4-OSO_3H$ |
| 173 | " | " | H | H | $4-OCH_3$ | $3-CH_2-SO_2-C_2H_4-OSO_3H$ |
| 174 | " | " | H | $C_2H_5$ | $4-OCH_3$ | $3-CH_2-SO_2-C_2H_4-OSO_3H$ |
| 175 | 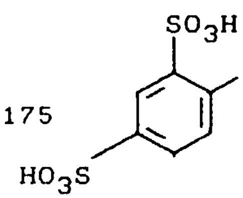 | $NHCONH_2$ | H | $C_2H_5$ | H | $4-CH_2-SO_2-C_2H_4-OSO_3H$ |

| Bsp. | D | B | A | R | Z | $-CH_2-SO_2-Y$ |
|---|---|---|---|---|---|---|
| 176 | 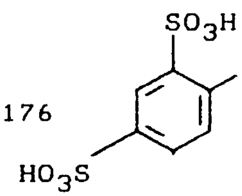 | $NHCONH_2$ | H | $C_2H_5$ | $4-CH_3$ | $3-CH_2-SO_2-C_2H_4-OSO_3H$ |
| 177 | " | $NHCONH_2$ | H | $C_2H_5$ | $4-OCH_3$ | $3-CH_2-SO_2-C_2H_4-OSO_3H$ |
| 178 | " | $NHCONH_2$ | H | H | $4-CH_3$ | $3-CH_2-SO_2-C_2H_4-OSO_3H$ |
| 179 | " | $NHCONH_2$ | H | H | $4-OCH_3$ | $3-CH_2-SO_2-C_2H_4-OSO_3H$ |
| 180 | " | $NHCOCH_3$ | H | $C_2H_5$ | H | $4-CH_2-SO_2-C_2H_4-OSO_3H$ |
| 181 | " | $NHCOCH_3$ | H | $C_2H_5$ | $4-CH_3$ | $3-CH_2-SO_2-C_2H_4-OSO_3H$ |
| 182 | " | $NHCOCH_3$ | H | $C_2H_5$ | $4-OCH_3$ | $3-CH_2-SO_2-C_2H_5-OSO_3H$ |
| 183 | " | $NHCOCH_3$ | H | H | $4-CH_3$ | $3-CH_2-SO_2-C_2H_5-OSO_3H$ |
| 184 | " | $NHCOCH_3$ | H | H | $4-OCH_3$ | $3-CH_2-SO_2-C_2H_5-OSO_3H$ |

Die Tabellenbeispiele werden durch folgende $\lambda_{max}$-Werte ($H_2O$) charakterisiert:

| Beispiel | nm |
|---|---|
| 3 | 518, 540 |
| 4 | 518, 540 |
| 7 | 519, 540 |
| 8 | 518, 540 |
| 21 | 521, 545 |
| 34a | 521, 544 |
| 44 | 519, 540 |
| 53 | 486 |
| 54 | 486 |
| 56 | 485 |
| 66 | 483 |
| 66a | 482 |
| 66b | 483 |
| 78 | 502 |
| 78b | 501 |
| 78c | 502 |
| 79 | 503 |
| 80 | 501 |
| 82 | 497 |
| 86 | 513 |
| 87 | 514 |
| 88a | 512 |

| Beispiel | nm |
|---|---|
| 95 | 389 |
| 96 | 390 |
| 97 | 389 |
| 100 | 389 |
| 105 | 388 |
| 106 | 388 |
| 107 | 388 |
| 108 | 387 |
| 111 | 397 |
| 112 | 399 |
| 113 | 397 |
| 114 | 396 |
| 115 | 400 |
| 116 | 416 |
| 117 | 416 |
| 118 | 416 |
| 119 | 416 |
| 120 | 418 |
| 135 | 388 |
| 136 | 389 |
| 137 | 388 |
| 138 | 388 |
| 147 | 390 |
| 148 | 390 |
| 151 | 407 |
| 152 | 407 |
| 172 | 397 |
| 165 | 388 |
| 166 | 388 |
| 167 | 388 |
| 171 | 399 |
| 173 | 417 |
| 174 | 418 |
| 175 | 388 |
| 177 | 388 |
| 179 | 389 |

## Patentansprüche

1. Reaktivfarbstoffe, die als freie Säure der Formel

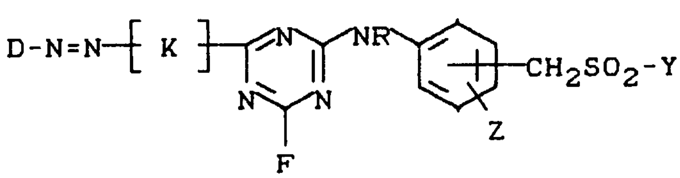

entsprechen,
worin bedeuten
K =

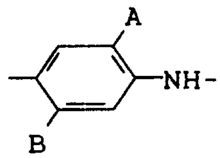

oder

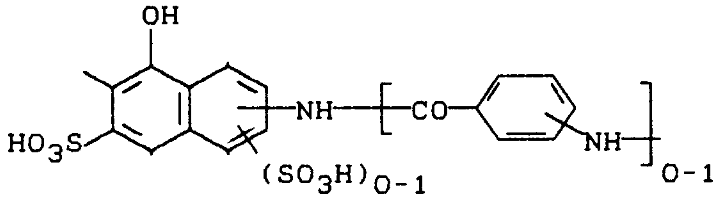

wobei die Bindung zum Triazinylrest jeweils an der Aminofunktion von K erfolgt,

- Y $CH=CH_2$, $CH_2CH_2OSO_3H$ oder $CH_2CH_2Cl$,
- R H oder $C_1$-$C_3$-Alkyl, welches mit OH, $CO_2H$ oder CN substituiert sein kann,
- Z H, $C_1$-$C_4$-Alkyl oder $C_1$-$C_4$-Alkoxy,
- D ein mit $SO_3H$, $CO_2H$, $CH_2$-$SO_2W$, $SO_2W$, NH-$COCH_3$, $C_1$-$C_4$-Alkyl und/oder $C_1$-$C_4$-Alkoxy substituierter Phenyl- bzw. Naphthyl-Rest, wobei W eine der unter Y angegebenen Bedeutungen hat, oder ein Rest der Struktur

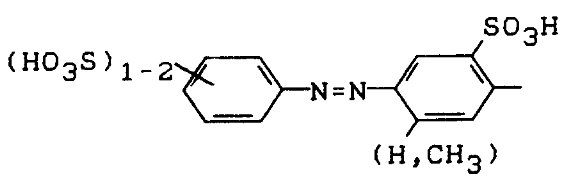

- A H, $C_1$-$C_4$-Alkyl oder $C_1$-$C_4$-Alkoxy,
- B H, $C_1$-$C_4$-Alkyl, Halogen, $C_1$-$C_4$-Alkoxy mit OH, $SO_3H$, $OSO_3H$ substituiertes $C_1$-$C_4$-Alkyl, $NHCONH_2$, NHCO-(-$C_1$-$C_4$-Alkyl), $NHCOCH_2OSO_3H$, NHCO-(-$CH_2$-$)_{1-3}$-$SO_3H$, $NHCOCH_2OH$ oder NHCO-(-O-$C_1$-$C_4$-Alkyl).

**2.** Reaktivfarbstoffe nach Anspruch 1, dadurch gekennzeichnet, daß sie der Formel

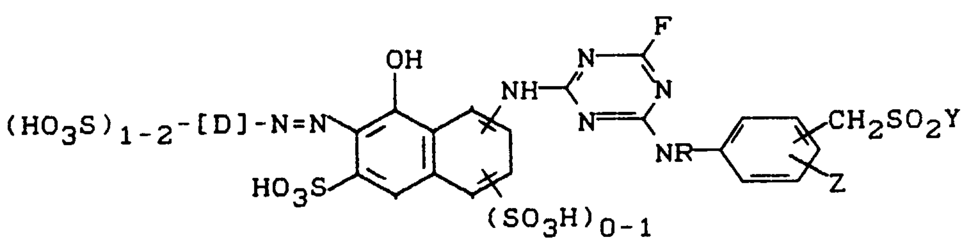

oder

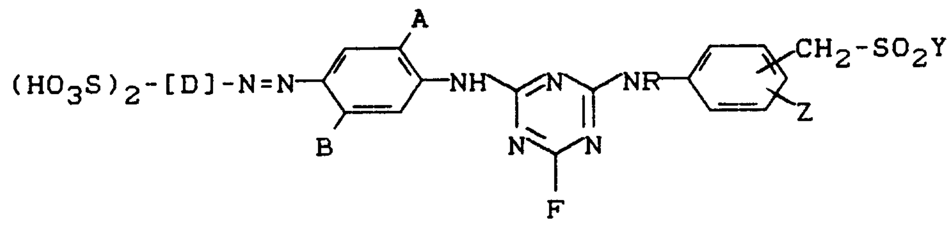

entsprechen, worin

R, Y, A, B und Z die in Anspruch 1 genannte Bedeutung zukommt und der Phenyl- bzw. Naphthylrest D zusätzlich durch $C_1$-$C_4$-Alkyl, $C_1$-$C_4$-Alkoxy, $NHCOCH_3$, $CH_2SO_2W$ oder $SO_2W$ substituiert sein kann, wobei W eine der unter Y angegebenen Bedeutungen hat.

**3.** Reaktivfarbstoffe nach wenigstens einem der vorhergehenden Ansprüche, dadurch gekennzeichnet, daß sie einer der folgenden Formeln entsprechen

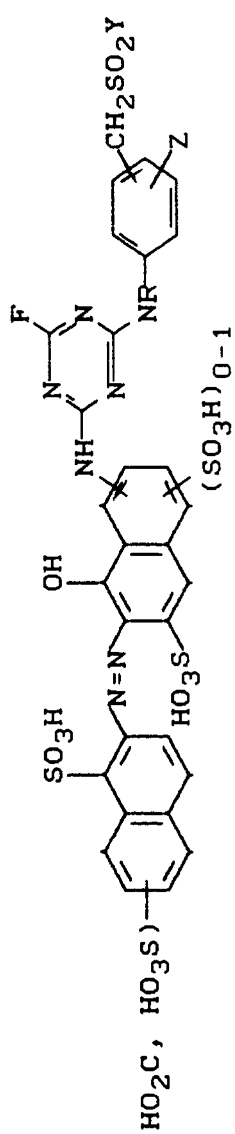

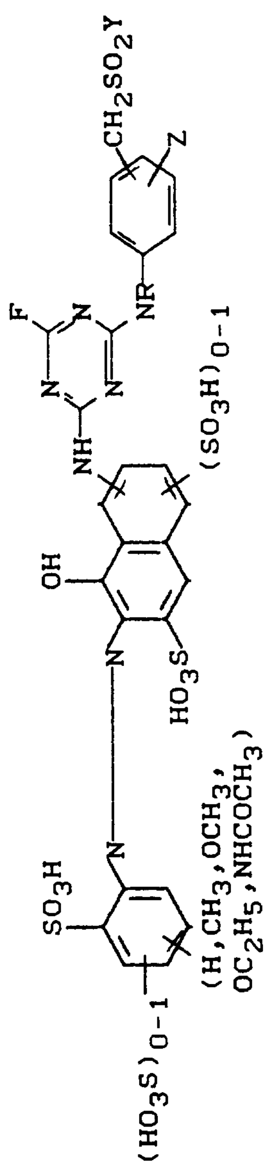

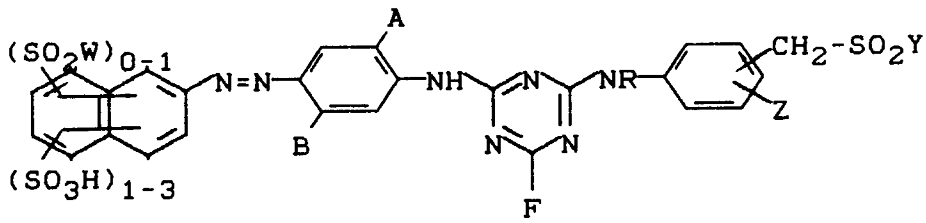

oder

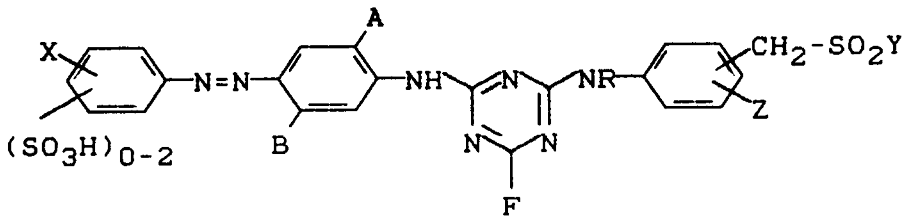

worin

X = H, $CH_3$, $OCH_3$, $OC_2H_5$, $CH_2SO_2W$ oder $SO_2W$,

und worin die übrigen Substituenten die in Anspruch 1 angegebene Bedeutung haben.

4. Reaktivfarbstoffe nach wenigstens einem der vorhergehenden Ansprüche, dadurch gekennzeichnet, daß sie wenigstens einer der folgenden Formeln entsprechen

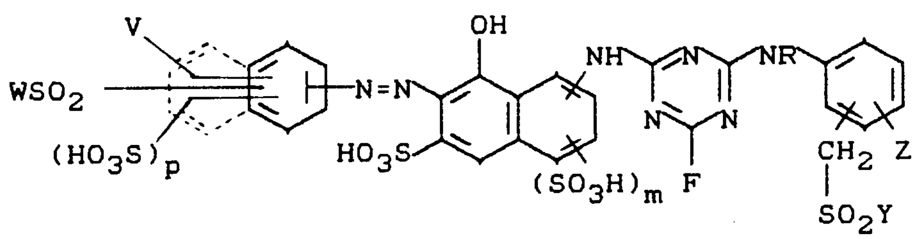

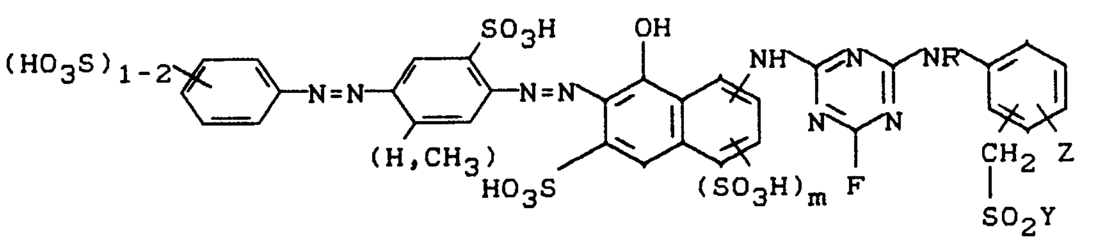

worin bedeuten

| | |
|---|---|
| V | H, $CH_3$, $OCH_3$, $OC_2H_5$ oder NHAcyl, insbesondere NH-CO-$CH_3$, |
| p,m | unabhängig voneinander 0 oder 1, |
| R | H oder $C_2H_5$, |
| W,Y | unabhängig voneinander $CH=CH_2$ oder $CH_2CH_2OSO_3H$ und |
| Z | H, $CH_3$ oder $OCH_3$. |

5. Reaktivfarbstoffe gemäß einem der vorhergehenden Ansprüche 1 bis 3, dadurch gekennzeichnet daß

A = H,

B = $CH_3$, $OCH_3$, $NHCOCH_3$, $NHCONH_2$ oder $NHCOCH_2OSO_3H$,

R = H oder $C_2H_5$,

W bzw. Y = unabhängig voneinander $CH=CH_2$ oder $CH_2CH_2OSO_3H$ und
Z = H, $CH_3$ oder $OCH_3$.

6. Reaktivfarbstoffe gemäß wenigstens einem der vorhergehenden Ansprüche, dadurch gekennzeichnet, daß sie einer der folgenden Formeln entsprechen

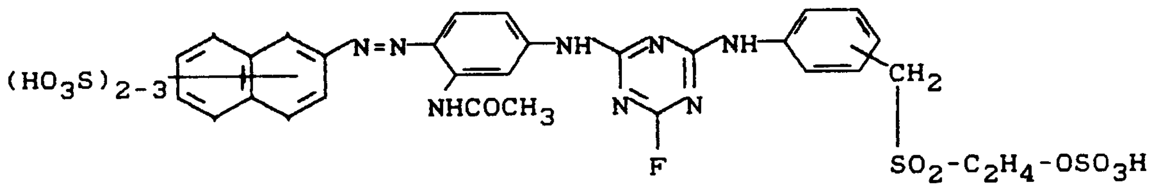

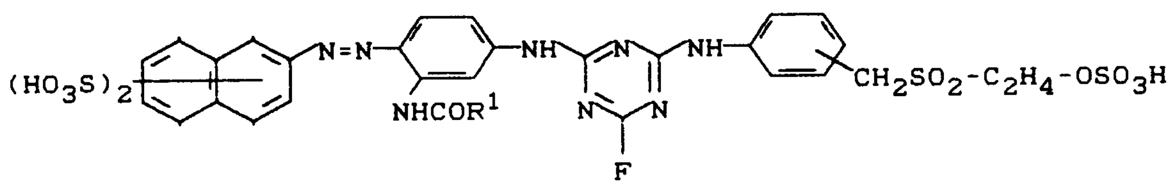

mit
$R^1$ = $CH_3$, $NH_2$

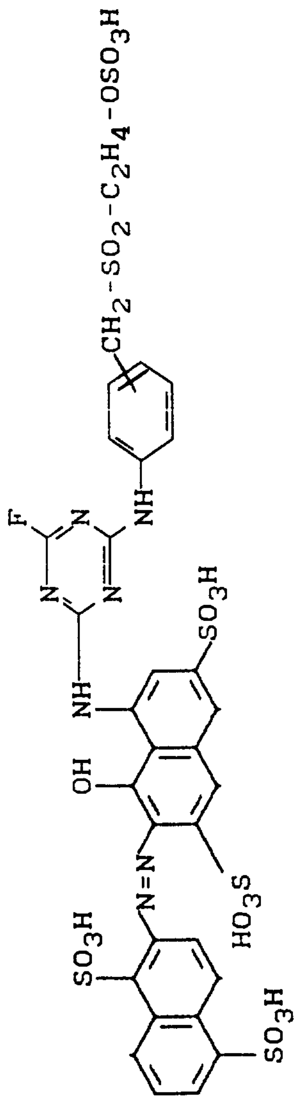

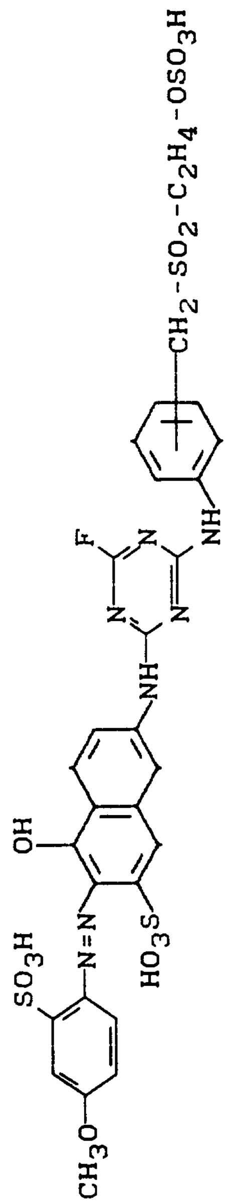

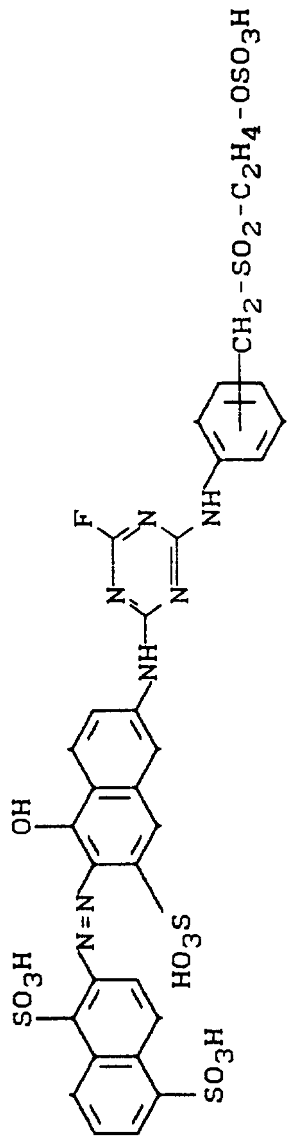

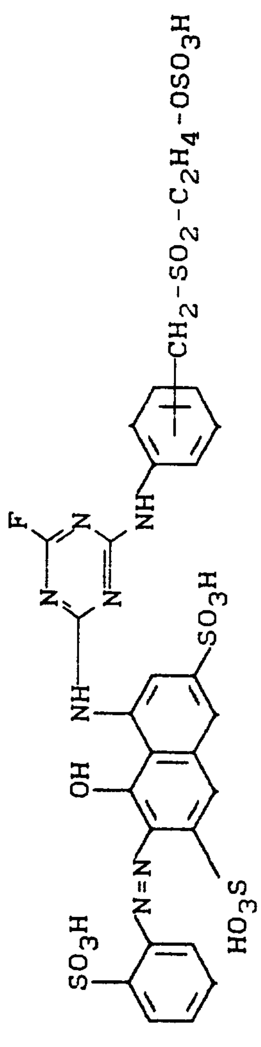

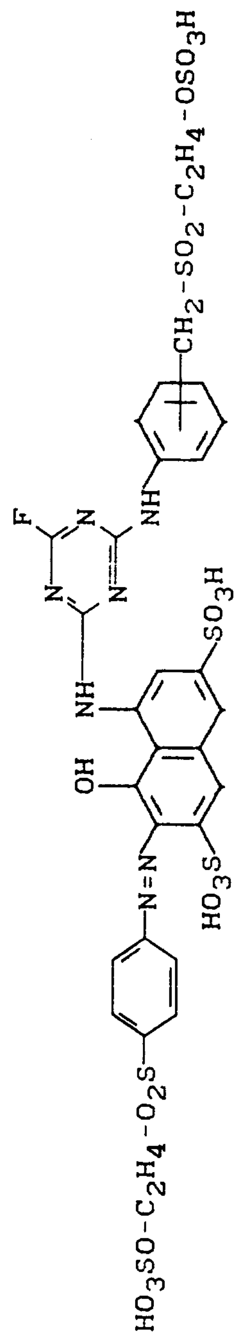

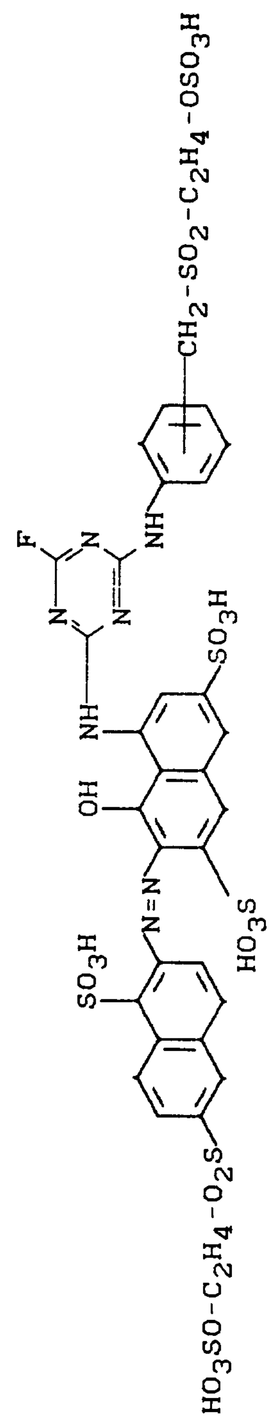

7. Verfahren zur Herstellung von Reaktivfarbstoffen gemäß Anspruch 1, durch Kondensation von Trifluor-s-triazin mit einer Farbbase der Formel (14)

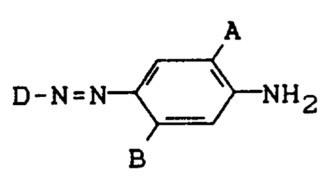

in Gegenwart säurebindender Mittel und anschließende Zweitkondensation der resultierenden Difluortriazinverbindungen der Formel (15)

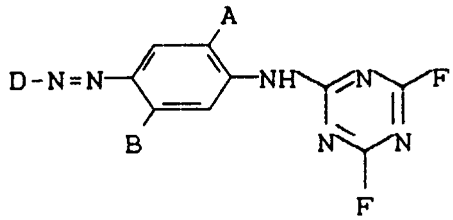

mit Aminoverbindungen der Formel (13)

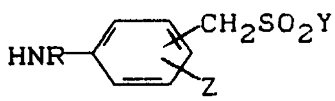

oder durch Kondensation von Trifluor-s-triazin mit Aminoverbindungen der Formel (13) in Gegenwart säurebindender Mittel und anschließende Zweitkondensation der resultierenden Difluortriazinverbindung der Formel (16)

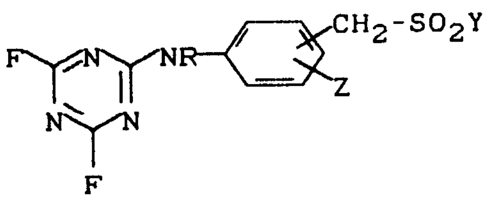

mit Farbbasen der Formel (14).

**8.** Verfahren zur Herstellung der Reaktivfarbstoffe gemäß Anspruch 1 durch Diazotieren von Aminen D-$NH_2$ und Kuppeln der resultierenden Diazoniumverbindungen mit Aminonaphtholsulfonsäure-Derivaten der Formel

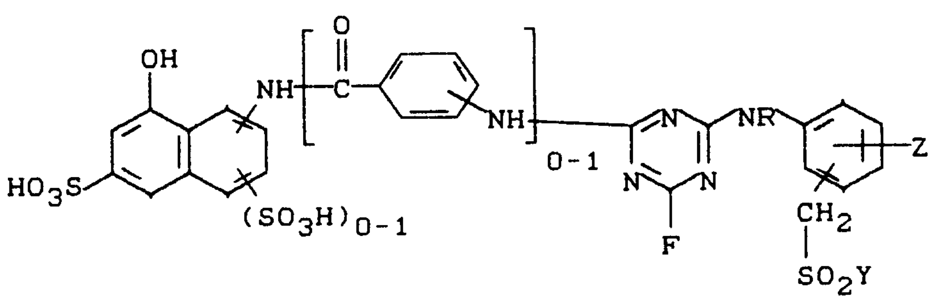

worin die Substituenten die in Anspruch 1 genannten Bedeutungen haben.

**9.** Verbindungen der Formel

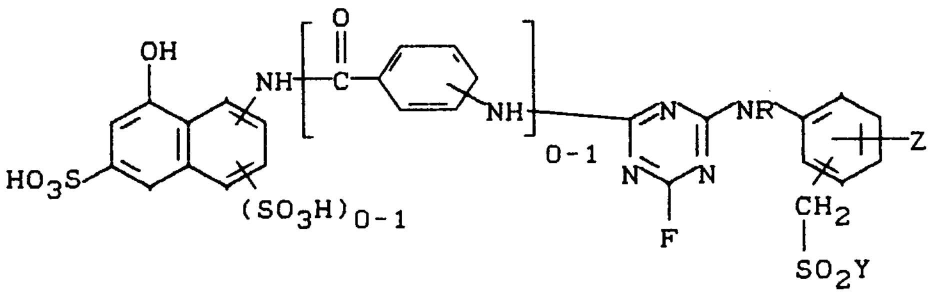

worin bedeuten

Y $CH=CH_2$, $CH_2CH_2OSO_3H$ oder $CH_2CH_2Cl$,

R H oder $C_1$-$C_3$-Alkyl, welches mit OH, $CO_2H$ oder CN substituiert sein kann,

Z H, $C_1$-$C_4$-Alkyl oder $C_1$-$C_4$-Alkoxy.

**10.** Verfahren zum Färben oder Bedrucken von natürlichen und synthetischen OH- und/oder amidgruppenhaltigen Materialien, bei welchen man einen Farbstoff auf das Material aufbringt oder in das Material einbringt und ihn, gegebenenfalls in der Wärme und/oder in Gegenwart eines säurebindenden Mittels, fixiert, dadurch gekennzeichnet, daß man als Farbstoff einen Farbstoff gemaß Anspruch 1 verwendet.

Europäisches Patentamt

# EUROPÄISCHER RECHERCHENBERICHT

Nummer der Anmeldung

EP 92 11 9964

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 307 817 (BASF)<br>* Beispiele * | 1-10 | C09B62/44<br>D06P3/66 |
| D,A | EP-A-0 065 732 (HOECHST)<br>* Beispiele * | 1-10 | |
| A | WO-A-9 109 914 (HOECHST)<br>* Beispiele * | 1-10 | |
| A | EP-A-0 079 562 (HOECHST)<br>* Ansprüche; Beispiel 3 * | 1-10 | |
| A | EP-A-0 356 681 (BAYER)<br>* Ansprüche; Beispiel 3 * | 1 | |

RECHERCHIERTE SACHGEBIETE (Int. Cl.5 )

C09B
D06P

Der vorliegende Recherchenbericht wurde für alle Patentansprüche erstellt

| Recherchenort | Abschlußdatum der Recherche | Prüfer |
|---|---|---|
| DEN HAAG | 26 FEBRUAR 1993 | KETTERER M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)